(19) **Europäisches Patentamt / European Patent Office / Office européen des brevets**

(11) **EP 2 304 962 B1**

(12) **FASCICULE DE BREVET EUROPEEN**

(45) Date de publication et mention de la délivrance du brevet:
**28.08.2019 Bulletin 2019/35**

(21) Numéro de dépôt: **09772732.5**

(22) Date de dépôt: **30.06.2009**

(51) Int Cl.:
***H04N 19/46*** *(2014.01)*

(86) Numéro de dépôt international:
**PCT/FR2009/051264**

(87) Numéro de publication internationale:
**WO 2010/001050 (07.01.2010 Gazette 2010/01)**

(54) **PROCÉDÉ ET DISPOSITIF DE CODAGE VIDÉO UTILISANT UN NOMBRE RÉDUITS DE VECTEURS DE MOUVEMENT POUR LES BLOCS CONNECTÉS**

VIDEOKODIERVERFAHREN UND -GERÄT MIT VERWENDING EINER REDUZERTEN ZAHL VON BEWEGUNGSVEKTOREN FÜR VERBUNDENE BLÖCKE

METHOD AND DEVICE FOR CODING A SEQUENCE OF IMAGES IMPLEMENTING A TIME PREDICTION, CORRESPONDING SIGNAL, DATA MEDIUM, DECODING METHOD AND DEVICE AND COMPUTER PROGRAM PRODUCTS

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **01.07.2008 FR 0854465**

(43) Date de publication de la demande:
**06.04.2011 Bulletin 2011/14**

(73) Titulaire: **Orange**
**75015 Paris (FR)**

(72) Inventeurs:
- **PATEUX, Stéphane**
  **F-35700 Rennes (FR)**
- **CAMMAS, Nathalie**
  **F-35490 Sens de Bretagne (FR)**
- **AMONOU, Isabelle**
  **F-35510 Cesson-Sevigne (FR)**
- **KERVADEC, Sylvain**
  **F-35490 Sens de Bretagne (FR)**

(74) Mandataire: **Vidon Brevets & Stratégie**
**16B, rue de Jouanet**
**BP 90333**
**35703 Rennes Cedex 7 (FR)**

(56) Documents cités:
**US-A- 6 058 212**

- **PRAKASH ISHWAR ET AL: "On Spatial Adaptation of Motion-Field Smoothness in Video Coding" IEEE TRANSACTIONS ON CIRCUITS AND SYSTEMS FOR VIDEO TECHNOLOGY, IEEE SERVICE CENTER, PISCATAWAY, NJ, US, vol. 10, no. 6, 1 septembre 2000 (2000-09-01), XP011014098 ISSN: 1051-8215 cité dans la demande**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

### 1. Domaine de l'invention

Le domaine de l'invention est celui du codage et du décodage de séquences d'images.

Plus précisément, l'invention concerne la compression/décompression de séquences d'images ou de scènes (bidimensionnelles ou présentant un nombre supérieur de dimensions) utilisant des transformées par blocs. L'invention s'applique en particulier à la prédiction temporelle mise en oeuvre dans les codeurs vidéo actuels (MPEG, H.264, etc) ou à venir (H.265).

### 2. Art antérieur

Les codeurs vidéo actuels, mettant en oeuvre les standards de compression vidéo issus de l'organisation MPEG (MPEG-1, MPEG-2, MPEG-4, ...) ou de l'Union Internationale des Télécommunications ITU-T (H.261, ..., H.264/AVC), permettent de coder une séquence d'images pour délivrer une séquence codée, compressée par rapport à la séquence d'images source.

Pour ce faire, ces codeurs utilisent un schéma de codage utilisant une prédiction entre les images de la séquence afin d'obtenir un niveau de performance en compression important.

On rappelle que les images d'une séquence sont classiquement découpées en tranches (« slices » en anglais), qui sont ensuite subdivisées en macroblocs. Chaque macrobloc est ensuite découpé en blocs de pixels, où un bloc de pixels correspond à un regroupement de pixels adjacents. Un bloc de pixels d'une image de la séquence peut alors être codé par prédiction temporelle à partir d'un ou plusieurs blocs d'une ou plusieurs autres images de la séquence. On parle de bloc « inter ». Un bloc de pixels peut aussi être codé par prédiction spatiale à partir d'un ou plusieurs blocs de l'image à coder. On parle de bloc « intra ».

Lors du codage d'un bloc, on spécifie si ce bloc est codé en utilisant ou non des informations provenant d'autres images de la séquence, dites images de

référence. Ces images de référence sont des images ayant été codées/décodées précédemment. Un bloc de référence correspond à un regroupement de pixels d'une image de référence.

Plus précisément, le codage d'un bloc inter se déroule en deux étapes :

- une prédiction du bloc à coder est d'abord réalisée en utilisant un ou plusieurs blocs de référence et un mécanisme de compensation en mouvement pour prendre en compte un mouvement apparent, ou bien encore aboutir à une prédiction efficace ;
- un résidu d'erreur de prédiction est ensuite calculé, en déterminant la différence entre le bloc à coder et la prédiction.

La différence, ou résidu, entre le bloc courant et le bloc prédit est alors codée et transmise (et/ou stockée, selon les applications). Au décodage, la différence reçue est ajoutée à la prédiction pour reconstruire le bloc.

Classiquement, dans les standards de compression vidéo, la prédiction par compensation en mouvement d'un bloc inter est réalisée par l'intermédiaire d'une compensation en mouvement de type translation. Ainsi, si on note *v* le vecteur mouvement considéré, et $R$ l'image de référence considérée, la prédiction **P** en chaque point ou pixel *x* du bloc est définie par : *P(x)=R(x+v).*

Un inconvénient de cette technique de compensation en mouvement est qu'elle ne permet pas de prendre en compte des mouvements naturels de type rotation, zoom, cisaillement, etc.

D'autres variantes de compensation en mouvement ont alors été proposées pour réaliser la prédiction.

Le document US6058212 décrit une technique de prédiction mettant en oeuvre un découpage d'une image en zones, et une technique d'interpolation adaptée à chacune des zones permettant notamment d'interpoler les vecteurs mouvement correspondant aux points d'une zone particulière, en tenant compte des vecteurs mouvement correspondant à des points spécifiques de cette zone situés à la frontière de la zone, et des vecteurs mouvement correspondant à des points spécifiques situés dans une zone adjacente.

Selon un autre exemple, P. Ishwar et P. Moulin ont proposé, dans le document « On Spatial Adaptation of Motion Field Smoothness in Video Coding », une technique de compensation de mouvement par blocs dite OBMC (en anglais « Overlapped Block Motion Compensation ») consiste à considérer plusieurs valeurs de vecteurs mouvement pour établir une valeur de prédiction d'un pixel x d'un bloc à coder :

$$P(x) = \sum_i w_i(x) R(x + v_i)$$

où : les vecteurs $v_i$ correspondent aux i vecteurs mouvement,
les valeurs $w_i(x)$ correspondent aux poids de pondérations entre les différentes prédictions obtenus par les différents vecteurs mouvement.

Les poids de pondérations $w_i(x)$ sont en général dépendants de la position du point $x$ considéré dans le bloc. Typiquement, les poids $w_i(x)$ utilisés sont les mêmes sur tous les blocs.

Bien que cette technique permette de prendre en compte une grande famille de mouvements naturels, la prédiction obtenue est de qualité moyenne. Le volume d'informations de résidu de prédiction à transmettre est donc plus important, et cette transmission d'informations supplémentaires entraîne des pénalités en termes de performances en compression.

Il existe donc un besoin pour de nouvelles techniques de codage/décodage d'images permettant de pallier au moins en partie les inconvénients de l'art antérieur, présentant une faible complexité tout en fournissant une prédiction de bonne qualité.

## 3. Exposé de l'invention

L'invention propose une solution nouvelle qui ne présente pas l'ensemble de ces inconvénients de l'art antérieur, sous la forme d'un procédé de codage d'une séquence d'images, tel que défini dans les revendications. Un tel procédé de codage comprend notamment une étape de codage d'au moins un bloc d'une image courante de la séquence, mettant en oeuvre une prédiction associant le bloc à au moins un bloc correspondant dans une image de référence de la séquence.

Selon l'invention, la prédiction comprend les étapes suivantes, pour au moins un bloc donné de l'image courante ou de l'image de référence respectivement :

détermination d'une pluralité de vecteurs de contrôle pour ledit bloc, représentatifs chacun d'un déplacement entre un point caractéristique du bloc et la position correspondante dudit point caractéristique dans l'image de référence ou dans l'image courante respectivement ;
au moins un découpage du bloc en sous-blocs ;
détermination d'une pluralité de vecteurs de contrôle pour les sous-blocs, à partir des vecteurs de contrôle pour le bloc ;
détermination d'une valeur de prédiction pour au moins un point de l'image courante, à partir d'une compensation en mouvement d'au moins un desdits sous-blocs, effectuée à partir des vecteurs de contrôle déterminés pour le sous-bloc.

Le procédé de codage comprend également une étape d'insertion, dans un signal représentatif de la séquence, d'informations de reconstruction des vecteurs de contrôle pour le bloc donné.

L'invention propose ainsi une nouvelle technique de prédiction d'un bloc « inter », offrant une bonne qualité de prédiction tout en conservant une faible complexité. La solution proposée permet également de prendre en compte des mouvements naturels dans la séquence d'images, en tenant compte du mouvement d'un bloc par rapport à l'un au moins de ses voisins (c'est-à-dire les blocs situés à gauche, à droite, au-dessus, ou au-dessous de ce bloc).

Pour ce faire, l'invention propose de déterminer plusieurs vecteurs de contrôle pour un bloc (par exemple deux, trois, quatre vecteurs, ou plus), définis en fonction de la connexion de ce bloc à un ou plusieurs de ces voisins.

Par exemple, les vecteurs de contrôle pour le bloc ou sous-bloc sont associés chacun à un des sommets du bloc ou sous-bloc. Ainsi, pour une image en deux dimensions, quatre vecteurs de contrôle sont associés au bloc, un vecteur de contrôle étant associé à chaque sommet ou coin du bloc. Pour une image en trois dimensions, huit vecteurs sont associés au bloc, qui correspond en fait à un cube, un vecteur de contrôle étant associé à chaque coin du bloc. Il est également possible d'associer ces vecteurs de contrôle à d'autres points du bloc, correspondant par exemple à un contour. De la même façon, le nombre de vecteurs de contrôle associé à un bloc n'est pas figé.

En particulier, la technique proposée permet de coder la séquence d'images en utilisant des projections avant et/ou arrière.

Ainsi, si la technique utilisée met en oeuvre une projection en arrière, la prédiction est une prédiction par compensation en mouvement arrière, et les vecteurs de contrôle pointent de l'image courante vers une ou plusieurs images de référence. Dans ce cas, on détermine une pluralité de vecteurs de contrôle pour un bloc donné appartenant à l'image courante.

A l'inverse, si la technique utilisée met en oeuvre une projection en avant, la prédiction est une prédiction par compensation en mouvement avant, et les vecteurs de contrôle pointent d'une ou plusieurs images de référence vers l'image courante. On détermine alors une pluralité de vecteurs de contrôle pour un bloc donné appartenant à une image de référence.

Pour au moins un bloc donné de l'image de référence ou de l'image courante, le bloc est ensuite découpé en sous-blocs, pour lesquels on détermine une pluralité de vecteurs de contrôle. Ces sous-blocs peuvent notamment être de taille différente.

Un tel découpage permet notamment de prendre en compte des mouvements naturels dans la séquence d'images, tels des mouvements de déformation affine, tout en n'effectuant que des opérations de translations de bloc. Ces opérations de translations de bloc limitent ainsi de façon significative la complexité du calcul des valeurs interpolées d'image à des positions sous-pixelliques (i.e. la mutualisation du calcul par bloc est plus efficace que le calcul séparé par point).

Selon un aspect particulier de l'invention, les informations de reconstruction des vecteurs de contrôle comprennent les vecteurs de contrôle pour le bloc donné, ou des informations représentatives de ces vecteurs de contrôle. Ainsi, ces vecteurs de contrôle pour le bloc peuvent être facilement reconstruits au niveau du décodeur.

Les informations de reconstruction des vecteurs de contrôle comprennent au moins un indicateur de connexion représentatif d'un mouvement entre le bloc donné et au moins un bloc voisin.

Par exemple, les informations de reconstruction des vecteurs de contrôle comprennent deux indicateurs de connexion, dont :

- un premier indicateur représentatif d'un mouvement entre le bloc donné et le bloc situé au-dessus du bloc donné, entre l'image courante et l'image de référence, et
- un deuxième indicateur représentatif d'un mouvement entre le bloc donné et le bloc situé à gauche du bloc donné, entre l'image courante et l'image de référence.

Ces indicateurs, notés par exemple « flag_tc » pour le premier indicateur, et « flag_lc » pour le deuxième indicateur, sont utilisés pour associer les mouvements du bloc donné et de son voisin (haut ou gauche) entre l'image courante et l'image de référence. Une fois reçus par un décodeur, ces indicateurs seront utilisés pour reconstruire les vecteurs de contrôle.

Par exemple, si le bloc donné et le bloc situé au-dessus présentent une arête commune à la fois dans l'image courante et dans l'image de référence, après compensation en mouvement, alors le premier indicateur est égal à 1 (flag_tc = 1). On dit que les deux blocs sont connectés.

Si le bloc donné et le bloc situé à sa gauche présentent une arête commune à la fois dans l'image courante et dans l'image de référence, après compensation en mouvement, alors le deuxième indicateur est égal à 1 (flag_lc = 1).

L'invention concerne également un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé de codage tel que décrit précédemment lorsque le programme est exécuté par un processeur.

Dans un autre mode de réalisation, l'invention concerne un dispositif de codage d'une séquence d'images, tel que défini dans les revendications. Un tel dispositif de codage comprend notamment des moyens de codage d'au moins un bloc d'une image courante de la séquence, mettant en oeuvre des moyens de prédiction associant ledit bloc à au moins un bloc correspondant dans une image de référence de la séquence.

Selon l'invention, les moyens de prédiction comprennent, pour au moins un bloc donné de l'image courante ou de l'image de référence respectivement :

des moyens de détermination d'une pluralité de vecteurs de contrôle pour le bloc ;
des moyens de découpage du bloc en sous-blocs ;
des moyens de détermination d'une pluralité de vecteurs de contrôle pour les sous-blocs, à partir des vecteurs de contrôle pour le bloc ;
des moyens de détermination d'une valeur de prédiction pour au moins un point de l'image courante, à partir d'une compensation en mouvement d'au moins un desdits sous-blocs, effectuée à partir des vecteurs de contrôle déterminés pour le sous-bloc.

De plus, un tel dispositif de codage comprend des moyens d'insertion, dans un signal représentatif de la séquence, d'informations de reconstruction des vecteurs de contrôle pour le bloc donné.

Un tel dispositif de codage est notamment adapté à mettre en oeuvre le procédé de codage décrit précédemment. Il s'agit par exemple d'un codeur vidéo de type MPEG ou H.264, ou selon une future norme de compression vidéo.

Encore un autre aspect de l'invention concerne un signal représentatif d'une séquence d'images codée selon le procédé de codage décrit précédemment.

Un tel signal comprend au moins une information de reconstruction des vecteurs de contrôle pour le bloc donné.

Ce signal pourra bien sûr comporter les différentes caractéristiques relatives au procédé de codage selon l'invention.

Les informations de reconstruction comprennent au moins un indicateur de connexion représentatif d'un mouvement entre le bloc donné et au moins un bloc voisin.

Selon une variante, les informations de reconstruction comprennent les vecteurs de contrôle, ou une information représentative de ces vecteurs, pour le bloc donné.

En particulier, un tel signal comprend également la différence, ou résidu, entre le bloc de l'image courante et la prédiction.

Ce signal peut également transporter des informations relatives à l'ordre de découpage des blocs.

L'invention concerne également un support d'enregistrement portant un signal tel que décrit précédemment.

Un autre aspect de l'invention concerne un procédé de décodage d'un signal représentatif d'une séquence d'images tel que défini dans les revendications. Un tel procédé de décodage comprend notamment une étape de reconstruction d'au moins une image de la séquence, à partir d'une prédiction de l'image à reconstruire, ladite prédiction associant un bloc de l'image à reconstruire à au moins un bloc correspondant dans une image de référence de la séquence.

Un tel procédé de décodage comprend une étape d'obtention d'informations de reconstruction de vecteurs de contrôle pour au moins un bloc donné de l'image à reconstruire ou de l'image de référence respectivement.

De plus, la prédiction comprend les étapes suivantes, pour le bloc donné :

- détermination d'une pluralité de vecteurs de contrôle pour le bloc, représentatifs chacun d'un déplacement entre un point caractéristique dudit bloc et la position correspondante dudit point caractéristique dans l'image de référence ou dans l'image à reconstruire respectivement, à partir des informations de reconstruction ;
- au moins un découpage du bloc en sous-blocs ;
- détermination d'une pluralité de vecteurs de contrôle pour les sous-blocs, à partir des vecteurs de contrôle pour le bloc ;
- détermination d'une valeur de prédiction pour au moins un point de l'image à reconstruire, à partir d'une compensation en mouvement d'au moins un desdits sous-blocs, effectuée à partir des vecteurs de contrôle déterminés pour le sous-bloc.

Un tel procédé est notamment adapté à décoder une séquence d'images codée selon le procédé de codage précédemment décrit. On effectue de cette façon les mêmes étapes de prédiction qu'au codage, de façon à reconstruire le bloc donné en ajoutant le résidu de prédiction (transmis dans le signal), à la prédiction.

La prédiction effectuée côté décodage utilise les informations de reconstruction des vecteurs de contrôle transmises dans le signal.

Ainsi, l'étape d'obtention comprend une étape d'extraction d'au moins un indicateur de connexion représentatif d'un mouvement entre le bloc donné et au moins un bloc voisin.

Il s'agit par exemple des indicateurs « flag_tc » (premier indicateur) et « flag_lc » (deuxième indicateur) transmis dans le signal.

Ces indicateurs sont notamment utilisés pour reconstruire les vecteurs de contrôle pour le bloc donné.

En particulier, le procédé de décodage comprend une étape de décision et/ou de paramétrage du découpage, permettant de décider si le bloc donné doit être découpé, et/ou de paramétrer le découpage du bloc donné. Ces étapes de décision et/ou paramétrage sont définies en tenant compte d'un critère prédéterminé appartenant au groupe comprenant :

- un nombre prédéfini de sous-blocs pour le bloc ;
- une information de similitude entre lesdits vecteurs de contrôle ;
- une taille dudit bloc ;
- un indicateur représentatif d'un nombre de découpage ;
- etc.

De cette façon, tous les blocs d'une image à reconstruire ou d'une image de référence ne sont pas nécessairement découpés en sous-blocs, et le découpage en sous-blocs peut varier d'un bloc à l'autre de l'image. Le partitionnement en sous-blocs est donc adaptatif.

L'invention concerne également un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé de décodage tel que décrit précédemment, lorsque le programme est exécuté par un processeur.

Dans un autre mode de réalisation, l'invention concerne un dispositif de décodage d'un signal représentatif d'une séquence d'images tel que défini dans les revendications. Un tel dispositif de décodage comprend notamment des moyens de reconstruction d'au moins une image de la séquence, mettant en oeuvre des moyens de prédiction de l'image à reconstruire, associant un bloc de l'image à reconstruire à au moins un bloc correspondant dans une image de référence de la séquence.

Un tel dispositif comprend des moyens d'obtention d'informations de reconstruction de vecteurs de contrôle pour au moins un bloc donné de l'image à reconstruire ou de l'image de référence respectivement.

De plus, les moyens de prédiction comprennent, pour le bloc donné :

- des moyens de détermination d'une pluralité de vecteurs de contrôle pour le bloc, à partir des informations de reconstruction ;
- des moyens de découpage du bloc en sous-blocs ;
- des moyens de détermination d'une pluralité de vecteurs de contrôle pour les sous-blocs, à partir des vecteurs de contrôle pour le bloc ;
- des moyens de détermination d'une valeur de prédiction pour au moins un point de l'image à reconstruire, à partir d'une compensation en mouvement d'au moins un desdits sous-blocs, effectuée, à partir des vecteurs de contrôle déterminés pour le sous-bloc.

Un tel dispositif de décodage est notamment adapté à mettre en oeuvre le procédé de décodage décrit précédemment. Il s'agit par exemple d'un décodeur vidéo de type MPEG ou H.264, ou selon une future norme de compression vidéo.

## 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- les figures 1A et 1B présentent les principales étapes de la prédiction par compensation en mouvement et du procédé de codage selon un mode de réalisation de l'invention ;
- la figure 2 propose un algorithme pour la détermination des vecteurs de contrôle pour un bloc ;
- les figures 3A à 3G illustrent la détermination des vecteurs de contrôle pour un bloc en tenant compte de ses voisins ;
- la figure 4 présente un exemple de découpage d'un bloc en sous-blocs ;
- la figure 5 illustre la détermination d'une valeur de prédiction pour un pixel ;
- la figure 6 présente les principales étapes du procédé de décodage selon un mode de réalisation de l'invention ;
- les figures 7 et 8 présentent la structure d'un dispositif de codage et d'un dispositif de décodage selon un mode de réalisation particulier de l'invention.

## 5. Description d'un mode de réalisation de l'invention

### 5.1 Principe général

Le principe général de l'invention repose sur le codage et le décodage d'une séquence d'images, mettant en oeuvre une prédiction temporelle associant un bloc d'une image à coder à au moins un bloc correspondant dans une image de référence de la séquence.

Plus précisément, l'invention propose une nouvelle technique de prédiction par compensation en mouvement d'un bloc codé en mode « inter ». La technique proposée permet d'obtenir une représentation d'un mouvement naturel en limitant la complexité apportée, tant au niveau des calculs que du nombre de paramètres à transmettre.

L'invention s'applique notamment au codage de séquences d'images ou de scènes représentées à l'aide de tubes de mouvement, où un tube de mouvement correspond à un bloc de pixels évoluant au cours du temps. Au cours de cette évolution, le tube peut se déformer, par exemple pour prendre en compte le mouvement apparent, ou bien encore si le nombre de pixels présents dans le bloc augmente ou diminue. Ce tube peut également se raffiner, par exemple en passant au niveau sous-pixellique du bloc. L'invention permet notamment de déterminer les déformations subies par un tube.

En particulier, on rappelle qu'un tube de mouvement est défini par au moins les informations suivantes :

- un bloc de pixels de référence comprenant des informations de texture de référence ;
- des instants de début de tube et de fin de tube ;
- des informations de transition, permettant de mettre à jour ledit bloc de référence à au moins un instant t de ladite séquence.

Une telle technique de représentation de séquences d'images est notamment décrite dans la demande de brevet français n°0756007 déposée le 25 juin 2007 au nom du même Demandeur.

La prédiction temporelle selon l'invention repose sur la détermination d'une pluralité de vecteurs de contrôle pour au moins un bloc, sur le découpage d'au moins ce bloc en sous-blocs, et sur la détermination d'une pluralité de vecteurs de contrôle pour les sous-blocs. Ces vecteurs de contrôle sont ensuite utilisés pour déterminer une prédiction des sous-blocs, puis du bloc.

*5.2 Compensation en mouvement*

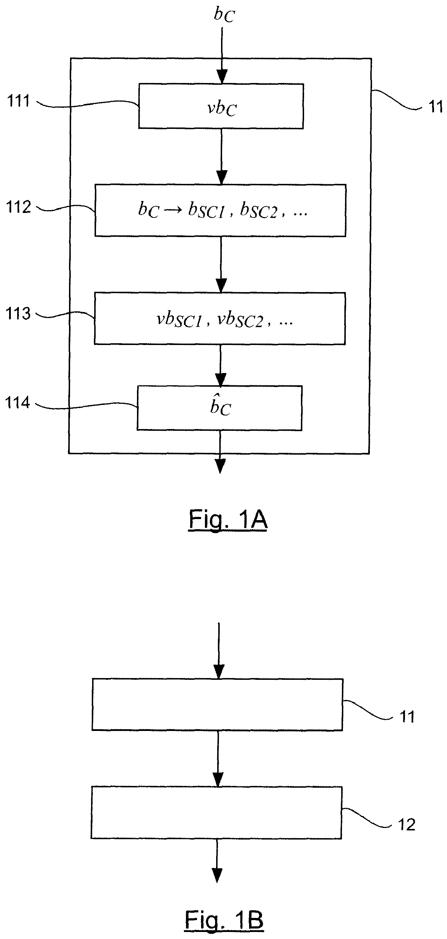

On décrit ci-après, en relation avec la figure 1A, les principales étapes mises en oeuvre pour la prédiction par compensation en mouvement, implémentées dans un codeur vidéo de type H.264 par exemple.

On note que l'invention peut s'appliquer aussi bien aux blocs qu'aux macroblocs au sens de la norme H.264. Le terme « bloc » dans la description doit donc s'interpréter comme signifiant «macrobloc» ou «bloc» au sens de cette norme, sauf lorsqu'il est précisé le contraire.

Comme illustré en figure 1A, la prédiction par compensation en mouvement (11) d'au moins un bloc d'une image courante d'une séquence d'image met en oeuvre les étapes suivantes, pour au moins un bloc donné $b_C$ d'une première image :

- détermination 111 d'une pluralité de vecteurs de contrôle $vb_C$ pour le bloc $b_C$, représentatifs chacun d'un déplacement entre un point caractéristique du bloc $b_C$ et sa position correspondante dans une deuxième image ;
- au moins un découpage 112 du bloc $b_C$ en sous-blocs $b_{SC1}$, $b_{SC2}$, *etc* ;
- détermination 113 d'une pluralité de vecteurs de contrôle $vb_{SC1}$, $vb_{SC2}$, etc pour les sous-blocs, à partir des vecteurs de contrôle $vb_C$ pour le bloc ;
- détermination 114 d'une valeur de prédiction pour au moins un point de l'image courante, à partir d'une compensation en mouvement effectuée à partir des vecteurs de contrôle $vb_{SC1}$, $vb_{SC2}$, etc, déterminés pour le sous-bloc.

En particulier, si la prédiction met en oeuvre une compensation en mouvement arrière, la première image est l'image courante et la deuxième image est une image de référence. On rappelle qu'une image de référence correspond à une image précédemment codée/décodée.

Si la prédiction met en oeuvre une compensation en mouvement avant, la première image est une image de référence et la deuxième image est l'image courante.

On détermine de cette façon une prédiction d'au moins un bloc de l'image courante, encore appelé bloc prédit $\hat{b}_C$.

On décrit ci-après plus en détail les différentes étapes mises en oeuvre pour la détermination de la prédiction d'un bloc codé en inter. Les étapes de détermination des vecteurs de contrôle et de découpage d'un bloc en sous-blocs, sont décrites dans le cas d'une compensation en mouvement arrière, selon laquelle les vecteurs de contrôle pointent de l'image courante vers une ou plusieurs images de référence. L'Homme du Métier étendra sans difficulté cet enseignement à une compensation en mouvement avant, selon laquelle les vecteurs de contrôle pointent d'une image de référence vers l'image courante, en remplaçant l'image courante par l'image de référence et inversement. L'étape de détermination de la valeur de prédiction d'un point ou pixel est ensuite décrite pour chacun des deux types de compensation en mouvement.

*A) Détermination des vecteurs de contrôle*

On détermine tout d'abord, de manière classique, un vecteur de mouvement pour le bloc $b_C$ de l'image courante $I_C$. On note ce vecteur mouvement $v$.

On détermine ensuite (111) une pluralité de vecteurs de contrôle $vb_C$ pour le bloc $b_C$. Selon cet exemple de réalisation, on détermine quatre vecteurs de contrôle pour le bloc, chacun étant associé à un sommet ou coin du bloc.

Par exemple, on note :

- $v_{br}$ le vecteur de contrôle associé au coin situé en bas à droite du bloc $b_C$ ;
- $v_{bl}$ le vecteur de contrôle associé au coin situé en bas à gauche du bloc $b_C$ ;
- $v_{tr}$ le vecteur de contrôle associé au coin situé en haut à droite du bloc $b_C$;
- $v_{tl}$ le vecteur de contrôle associé au coin situé en haut à gauche du bloc $b_C$.

Ces vecteurs de contrôle sont initialisés avec une valeur nulle.

Côté codage, on compare la position du bloc $b_C$ dans l'image courante $I_C$ par rapport à celle de ses voisins, et la position du bloc correspondant dans l'image de référence $I_R$ par rapport à celle de ses voisins.

Par exemple, si le bloc $b_C$ et le bloc situé au-dessus présentent une arête commune à la fois dans l'image courante et dans l'image de référence après compensation en mouvement, alors cela signifie que les deux blocs sont connectés verticalement.

On affecte alors la valeur 1 à un premier indicateur flag_tc.

Si le bloc $b_C$ et le bloc situé à sa gauche présentent une arête commune à la fois dans l'image courante et dans l'image de référence après compensation en mouvement, alors cela signifie que les deux blocs sont connectés horizontalement.

On affecte alors la valeur 1 à un deuxième indicateur flag_lc.

Ces indicateurs sont utilisés pour représenter les mouvements du bloc $b_C$ et de son voisin (haut ou gauche) entre l'image courante et l'image de référence. Ils peuvent être utilisés pour déterminer les vecteurs de contrôle. Ces indicateurs pourront être utilisés pour reconstruire les vecteurs de contrôle, s'ils sont reçus par un décodeur.

Optionnellement, pour une implémentation à signalisation réduite, les deux indicateurs flag_tc et flag_lc peuvent être contraints à prendre la même valeur. Ils sont alors représentés par un indicateur unique flag_c prenant la valeur 0 ou 1. Dans cette variante, un unique indicateur est donc utilisé par un décodeur pour reconstruire les vecteurs de contrôle.

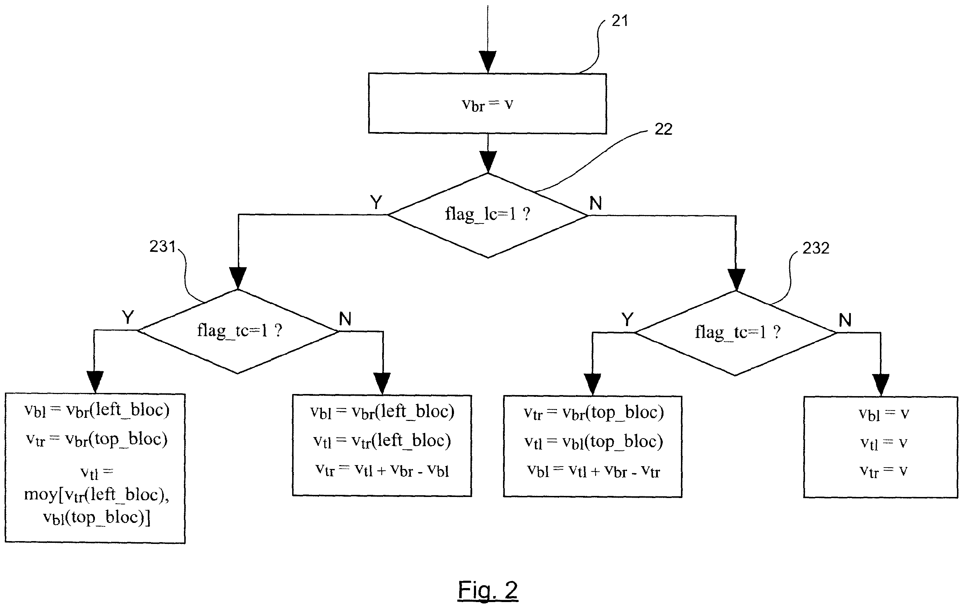

Après analyse des images courante et de référence, on détermine les vecteurs de contrôle $v_{br}$, $v_{bl}$, $v_{tr}$ et $v_{tl}$ pour le bloc $b_C$, comme proposé en figure 2.

Par exemple, on affecte 21 au vecteur de contrôle $v_{br}$ associé au coin situé en bas à droite du bloc $b_C$ le vecteur mouvement $v$, préalablement défini pour le bloc.

On vérifie (22) ensuite si l'indicateur flag_lc est égal à 1, ce qui signifie que le bloc $b_C$ et le bloc situé à sa gauche sont connectés horizontalement.

On vérifie également (231, 232) si l'indicateur flag_tc est égal à 1, ce qui signifie que le bloc $b_C$ et le bloc situé au-dessus sont connectés verticalement.

Si l'indicateur flag_lc est égal à 1, alors le vecteur de contrôle $v_{bl}$ prend la valeur du vecteur de contrôle $v_{br}$ du bloc situé à gauche du bloc $b_C$ ($v_{bl} = v_{br}(left\_bloc)$). Ces notations sont choisies de façon à faciliter la lecture et la compréhension des équations par l'Homme du Métier du domaine considéré.

De plus, en mode connecté vertical (indicateur flag_tc égal à 1), le vecteur de contrôle $v_{tr}$ prend la valeur du vecteur de contrôle $v_{br}$ du bloc situé au-dessus du bloc $b_C$ ($v_{tr} = v_{br}(top\_bloc)$), et le vecteur de contrôle $v_{tl}$ prend la valeur moyenne du vecteur de contrôle $v_{bl}$ du bloc situé au-dessus du bloc $b_C$ et du vecteur de contrôle $v_{tr}$ du bloc situé à gauche du bloc $b_C$ ($v_{tl} = moy[v_{tr}(left\_bloc), v_{bl}(top\_bloc)]$).

En mode non connecté vertical (indicateur flag_tc égal à 0), le vecteur de contrôle $v_{tl}$ prend la valeur du vecteur de contrôle $v_{tr}$ du bloc situé à gauche du bloc $b_C$ ($v_{tl} = v_{tr}(left\_bloc)$), et le vecteur de contrôle $v_{tr}$ est obtenu à partir des trois autres vecteurs de contrôle du bloc $b_C$ ($v_{tr} = v_{tl} + v_{br} - v_{bl}$).

Si au cours de l'étape 22 on constate que l'indicateur flag_lc n'est pas égal à 1, ce qui signifie que le bloc $b_C$ et le bloc situé à sa gauche sont en mode non connecté, on obtient :

- en mode connecté vertical (indicateur flag_tc égal à 1) :

  ○ le vecteur de contrôle $v_{tr}$ prend la valeur du vecteur de contrôle $v_{br}$ du bloc situé au-dessus du bloc $b_C$ ($v_{tr} = v_{br}(top\_bloc)$) ;
  ○ le vecteur de contrôle $v_{tl}$ prend la valeur du vecteur de contrôle $v_{bl}$ du bloc situé au-dessus du bloc $b_C$ ($v_{tl} = v_{bl}(top\_bloc)$) ;
  ○ le vecteur de contrôle $v_{bl}$ est obtenu à partir des trois autres vecteurs de contrôle du bloc $b_C$ ($v_{bl} = v_{tl} + v_{br} - v_{tr}$) ;

- en mode non connecté vertical (indicateur flag_tc égal à 0) :
  ○ les vecteurs de contrôle $v_{tl}$, $v_{tr}$ et $v_{bl}$ prennent tous la valeur du vecteur de contrôle $v_{br}$ du bloc $b_C$ ($v_{bl} = v_{tl} = v_{br} = v_{tr} = v$).

En particulier, si un bloc n'a pas de voisin à sa gauche, alors les vecteurs de contrôle associés à ses coins haut gauche et bas gauche sont définis à partir des vecteurs de contrôle déterminés pour ses coins haut droit et bas droit ($v_{bl} = v_{br}$ et $v_{tl} = v_{tr}$). De la même façon, si un bloc n'a pas de voisin au-dessus, alors les vecteurs de contrôle associé à ses coins haut gauche et haut droit sont définis à partir des vecteurs de contrôle déterminés pour ses coins bas gauche et bas droit ($v_{tl} = v_{bl}$ et $v_{tr} = v_{br}$). Si un bloc n'a ni de voisin à gauche, ni de voisin au-dessus, alors les vecteurs de contrôle associé à ses coins haut gauche, haut droit, et bas droit, sont définis à partir du vecteur de contrôle déterminé pour son coin bas droit ($v_{bl} = v_{tl} = v_{tr} = v_{br}$).

Selon le mode de réalisation présenté, les indicateurs flag_lc et flag_tc sont transmis au décodeur, sous la forme d'informations de reconstruction des vecteurs de contrôle pour le bloc $b_C$.

En particulier, ces indicateurs peuvent être définis pour un ensemble de bloc, ou bien encore bloc par bloc. Par ailleurs, ces indicateurs peuvent être exploités lors de la définition du vecteur mouvement v pour le bloc donné. En effet, ces informations peuvent être utilisées par exemple dans le mode de prédiction utilisé pour la prédiction du vecteur de mouvement associé au bloc donné.

Ainsi, si le bloc donné et le bloc situé au-dessus sont connectés et que le bloc donné n'est pas connecté au bloc situé à sa gauche, alors le codage du vecteur mouvement du bloc donné peut se faire à l'aide d'une prédiction définie par le vecteur mouvement du bloc situé au-dessus (et non une prédiction à partir du vecteur médian des blocs voisins, comme utilisé dans un codeur de l'état de l'art).

De même, si le bloc donné et le bloc situé à sa gauche sont connectés et que le bloc donné n'est pas connecté au bloc situé au-dessus, alors le codage du vecteur mouvement du bloc donné peut se faire à l'aide d'une prédiction définie par le vecteur mouvement du bloc situé à sa gauche (et non une prédiction à partir du vecteur médian des blocs voisins, comme utilisé dans un codeur de l'état de l'art).

De plus, selon le mode de réalisation présenté, on peut ne coder qu'un seul vecteur mouvement, le vecteur $v$ ($v = v_{br}$). Les autres vecteurs de mouvement ($v_{tr}$, $v_{tl}$, $v_{bl}$) peuvent être définis à l'aide des indicateurs flag_lc et flag_tc.

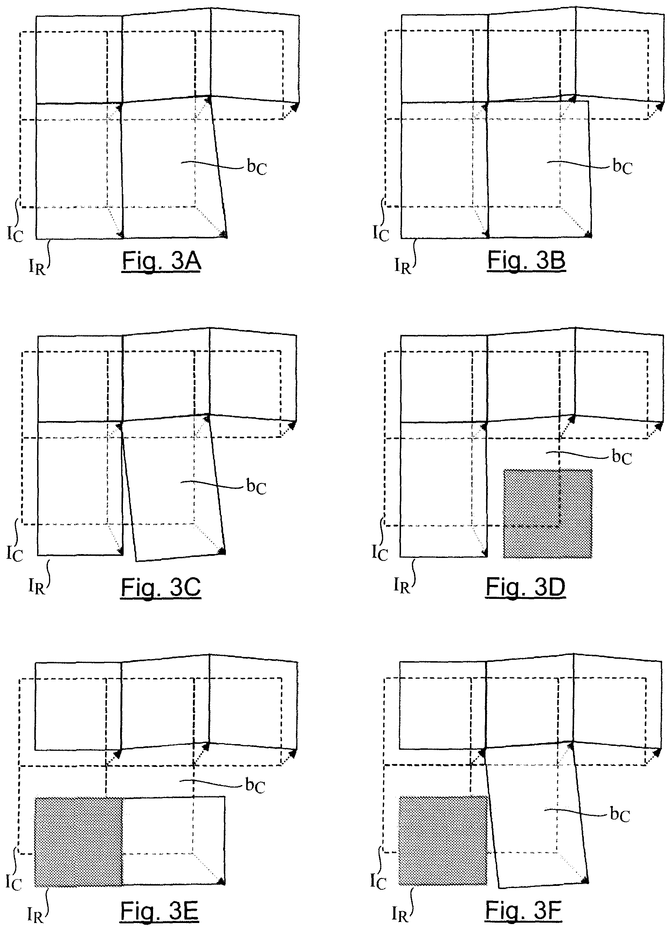

Les figures 3A à 3F illustrent notamment la détermination des vecteurs de contrôle pour le bloc $b_C$ d'une image courante $I_C$, pour une prédiction par compensation en mouvement arrière, selon laquelle les vecteurs de contrôle pointent de l'image courante $I_C$ vers une image de référence $I_R$.

Plus précisément, la figure 3A illustre la détermination des vecteurs de contrôle pour le bloc $b_C$ dans le cas où les blocs situés à gauche et au-dessus du bloc $b_C$ sont cohérents, c'est-à-dire que le coin en bas à gauche du bloc situé au-dessus du bloc $b_C$, et le coin en haut à droite du bloc situé à gauche du bloc $b_C$ sont connectés, et les indicateurs flag_lc et flag_tc égaux à 1.

La figure 3B illustre le cas où les blocs situés à gauche et au-dessus du bloc $b_C$ sont cohérents, l'indicateur flag_lc égal à 1 et l'indicateur flag_tc égal à 0.

La figure 3C illustre le cas où les blocs situés à gauche et au-dessus du bloc $b_C$ sont cohérents, l'indicateur flag_lc égal à 0 et l'indicateur flag_tc égal à 1.

La figure 3D illustre le cas où les blocs situés à gauche et au-dessus du bloc $b_C$ sont cohérents, et les indicateurs flag_lc et flag_tc égaux à 0.

La figure 3E illustre le cas où les blocs situés à gauche et au-dessus du bloc $b_C$ sont non cohérents, c'est-à-dire que le coin en bas à gauche du bloc situé au-dessus du bloc $b_C$, et le coin en haut à droite du bloc situé à gauche du bloc $b_C$ sont différents, l'indicateur flag_lc égal à 1 et l'indicateur flag_tc égal à 0.

La figure 3F illustre le cas où les blocs situés à gauche et au-dessus du bloc $b_C$ sont non cohérents, l'indicateur flag_lc égal à 0 et l'indicateur flag_tc égal à 1.

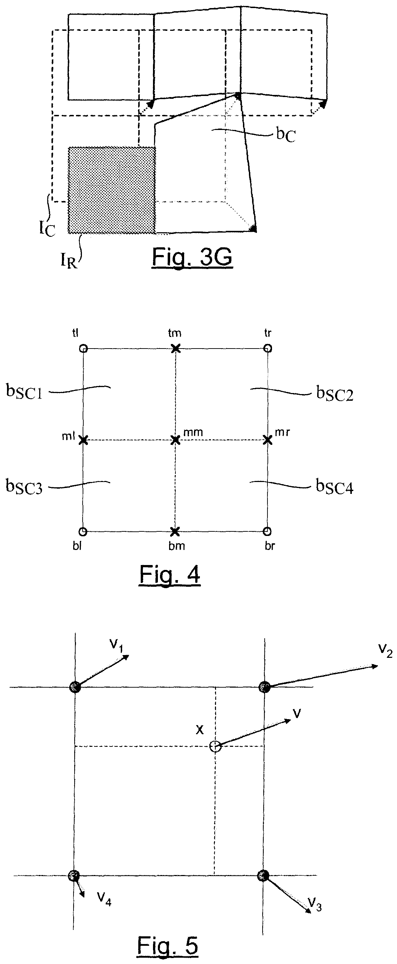

La figure 3G illustre le cas où les blocs situés à gauche et au-dessus du bloc $b_C$ sont non cohérents, et les indicateurs flag_lc et flag_tc égaux à 1.

*B) Découpage d'un bloc en sous-blocs*

On décrit ci-après plus précisément l'étape 112 de découpage du bloc $b_C$ en sous-blocs. On rappelle que selon l'invention, au moins un bloc de l'image courante est décomposé en sous-blocs.

Les quatre vecteurs de contrôle définis pour le bloc $b_C$ sont alors utilisés afin d'être interpolé pour définir les vecteurs de contrôle des différents sous-blocs. Par exemple, on détermine quatre vecteurs de contrôle pour chaque sous-bloc.

Ainsi, comme illustré en figure 4, le bloc $b_C$ est par exemple découpé en quatre sous-blocs $b_{SC1}$, $b_{SC2}$, $b_{SC3}$ et $b_{SC4}$. Les vecteurs de contrôle attachés au bloc $b_C$ sont ensuite interpolés pour définir de nouveaux vecteurs de contrôle pour les sous-blocs. Par exemple, on note :

- $v_{ml}$ le vecteur de contrôle associé au coin situé en bas à gauche du sous-bloc $b_{SC1}$, correspondant également au coin situé en haut à gauche du sous-bloc $b_{SC3}$ ;
- $v_{tm}$ le vecteur de contrôle associé au coin situé en haut à droite du sous-bloc $b_{SC1}$, correspondant également au coin situé en haut à gauche du sous-bloc $b_{SC2}$ ;
- $v_{mr}$ le vecteur de contrôle associé au coin situé en bas à droite du sous-bloc $b_{SC2}$, correspondant également au coin situé en haut à droite du sous-bloc $b_{SC4}$ ;
- $v_{bm}$ le vecteur de contrôle associé au coin situé en bas à droite du sous-bloc $b_{SC3}$, correspondant également au coin situé en bas à gauche du sous-bloc $b_{SC4}$ ; et
- $v_{mm}$ le vecteur de contrôle associé au coin situé en bas à droite du sous-bloc $b_{SC1}$, correspondant également au coin situé en bas à gauche du sous-bloc $b_{SC2}$, au coin situé en haut à droite du sous-bloc $b_{SC3}$, et au coin situé en haut à gauche du sous-bloc $b_{SC4}$.

Les vecteurs de contrôle pour les sous-blocs sont alors déterminés à partir des vecteurs de contrôle pour le bloc $b_C$, par exemple de la manière suivante :

$$v_{tm} = \frac{v_{tl} + v_{tr}}{2}, \quad v_{bm} = \frac{v_{bl} + v_{br}}{2}, \quad v_{ml} = \frac{v_{tl} + v_{bl}}{2},$$

$$v_{mr} = \frac{v_{tr} + v_{br}}{2} \quad \text{et} \quad v_{mm} = \frac{v_{tl} + v_{tr} + v_{bl} + v_{br}}{4}.$$

Ces vecteurs de contrôle sont ensuite affectés aux différents sous-blocs :

- le sous-bloc $b_{SC1}$ situé en haut à gauche a pour vecteurs de contrôle les vecteurs mouvement $v_{tl}$, $v_{tm}$, $v_{ml}$, $v_{mm}$ ;
- le sous-bloc $b_{SC2}$ situé en haut à droite a pour vecteurs de contrôle les vecteurs mouvement $v_{tm}$, $v_{tr}$, $v_{mm}$, $v_{mr}$ ;
- le sous-bloc $b_{SC3}$ situé en bas à gauche a pour vecteurs de contrôle les vecteurs mouvement $v_{ml}$, $v_{mm}$, $v_{bl}$, $v_{bm}$ ;
- le sous-bloc $b_{SC4}$ situé en bas à droite a pour vecteurs de contrôle les vecteurs mouvement $v_{mm}$, $v_{mr}$, $v_{bm}$, $v_{br}$.

Le nombre de découpage peut dépendre de plusieurs paramètres. Par exemple, il peut être défini par un paramètre global défini pour un ensemble de blocs, ou bien être adaptatif par bloc. On partitionne ainsi un bloc en sous-blocs de plus petite taille pour lesquels une prédiction spécifique est réalisée. Il apparaît alors des tailles variables de blocs pour réaliser la compensation en mouvement.

Plus précisément, le nombre de découpage peut être défini selon la taille du bloc, ou selon un nombre prédéfini de sous-blocs pour le bloc. Par exemple, un macrobloc de taille 16x16 peut être découpé en huit blocs de taille 4x8 ou 8x4, ou en quatre blocs de taille 8x8, ou en blocs en deux blocs de taille 8x16 ou 16x8.

Selon une variante, on compare deux à deux les vecteurs de contrôle associés au bloc $b_C$, de façon à obtenir une information de similitude. On découpe ensuite le bloc $b_C$ en sous-blocs uniquement si l'information de similitude est supérieure à au moins un seuil prédéterminé.

Dans le cas adaptatif par bloc, on peut définir le nombre de subdivisions à effectuer en fonction de la différence maximale entre l'amplitude des vecteurs de contrôle (par exemple par une simple quantification de la valeur de différence maximale).

*C) Détermination de la valeur de prédiction pour au moins un point de l'image courante pour une compensation en mouvement arrière d'un sous-bloc de l'image courante*

On présente ci-après l'étape 114 de détermination d'une valeur de prédiction pour au moins un pixel de l'image courante, à partir d'une compensation en mouvement arrière effectuée à partir des vecteurs de contrôle déterminés pour un sous-bloc de l'image courante, comme illustré en figure 5.

Etant donné un sous-bloc et ses quatre vecteurs de contrôle, on établit pour tout point x de ce sous-bloc une prédiction *P(x)* à l'aide de l'équation suivante :

$$P(x) = w_1(x)I_R(x + v_1) + w_2(x)I_R(x + v_2) + w_3(x)I_R(x + v_3) + w_4(x)I_R(x + v_4)$$

avec : $(v_1, v_2, v_3, v_4) = (v_{tl}, v_{tm}, v_{mn}, v_{ml})$ pour le sous-bloc $B_{SC1}$ ;
$(v_1, v_2, v_3, v_4) = (v_{tm}, v_{tr}, v_{mr}, v_{mm})$ pour le sous-bloc $b_{SC2}$ ;
$(v_1, v_2, v_3, v_4) = (v_{ml}, v_{mm}, v_{bm}, v_{bl})$ pour le sous-bloc $b_{SC3}$ ; et
$(v_1, v_2, v_3, v_4) = (v_{mm}, v_{mr}, v_{br}, v_{bm})$ pour le sous-bloc $b_{SC4}$.

Les poids de pondération $w_1(x)$, $w_2(x)$, $w_3(x)$, $w_4(x)$ peuvent être déterminés comme décrit dans le document « *On Spatial Adaptation of Motion Field Smoothness in Video Coding* » précité. D'autres techniques connues sont également envisageables.

On détermine de cette façon une prédiction d'au moins un bloc de l'image courante $I_C$.

*D) Détermination de la valeur de prédiction pour au moins un point de l'image courante pour une compensation en mouvement avant d'un sous-bloc d'une image de référence*

On présente ci-après l'étape 114 de détermination d'une valeur de prédiction pour au moins un pixel de l'image courante, à partir d'une compensation en mouvement avant effectuée à partir des vecteurs de contrôle déterminés pour un sous-bloc d'une image de référence.

Dans le cas de la compensation en mouvement avant, les blocs de l'image courante peuvent être prédit par plusieurs blocs d'une ou plusieurs images de référence. Afin de calculer, pour un point de l'image courante, une valeur de prédiction, il est nécessaire de projeter tous les blocs des images référence sur l'image courante afin de déterminer quels blocs permettent de prédire le point de l'image courante.

On propose ci-après un algorithme pour la construction d'une image de prédiction pour l'image courante.

Au cours d'une première étape, on initialise l'image de prédiction. Ainsi, pour tout point x de l'image, on a :

*RI(x) = 0, RW(x) = 0.* RI correspond à l'image de prédiction dans laquelle toutes les valeurs de prédiction données par les blocs des images de référence sont pondérées et accumulées. RW correspond à l'image d'accumulation des poids.

Pour tout sous-bloc $b_{SC1}$, $b_{SC2}$,..., on met en oeuvre les étapes suivantes :

- pour chaque vecteur mouvement du sous-bloc, on met à jour l'image de prédiction, pour *ab* égal à *tl, tr, bl* puis *br*. Pour tout x dans le sous-bloc :

  - on accumule la valeur $w_{ab}(x)*P(x)$ aux points $RI(x + v_{ab})$ : $RI(x + v_{ab})$ += $w_{ab}(x)*P(x)$,
    $P(x)$ étant la prédiction au point x du sous-bloc ;
  - on accumule la valeur $w_{ab}(x)$ aux points $RW(x + v_{ab})$ : $RW(x + v_{ab})$ += $w_{ab}(x)$.

Les poids $w_{ab}$ utilisés lors de la compensation du mouvement avant peuvent prendre la valeur des poids utilisés dans une compensation de mouvement en arrière, mais aussi des valeurs différentes. En particulier, leurs valeurs peuvent différer et être adaptatives par bloc. Par exemple, cette adaptation peut être dépendante de la similitude des vecteurs mouvement de contrôle.

L'image de prédiction est alors normalisée : pour tout point *x* dans l'image :

- si *RW(x)* est différent de 0, on divise *RI(x)* par *RW(x)* :

$$RW(x)!=0 \text{ alors } RI(x) \mathrel{/}= RW(x) \text{ ;}$$

- sinon, *RI(x)* est mis à une valeur prédéfinie UNDEF, par exemple la valeur 0.

Optionnellement, les valeurs non définies, pour lesquelles *RW(x)* est égal à 0, sont modifiées, afin d'avoir une valeur plus probable par rapport à leur voisinage. Cette dernière étape peut être réalisée de différentes façons, par exemple en définissant pour toute valeur non définie la valeur du point y le plus proche dans l'image de prédiction ayant une valeur correctement définie (c'est-à-dire *RW(y)* différent de 0).

On détermine de cette façon une prédiction des blocs de l'image courante $I_C$.

*5.3 Codage*

On décrit ci-après en relation avec la figure 1B, les principales étapes de codage, mises en oeuvre dans un codeur vidéo de type H.264 par exemple. En particulier, le procédé selon l'invention peut être mis en oeuvre de diverses manières, notamment sous forme câblée ou sous forme logicielle.

Comme illustré en figure 1B, le procédé de codage selon l'invention comprend une étape de codage 11 d'au moins un bloc $b_C$ d'une image courante $I_C$ d'une séquence d'image, mettant en oeuvre une prédiction par compensation en mouvement telle que décrite précédente en relation avec la figure 1A.

On détermine de cette façon une prédiction d'au moins un bloc de l'image courante $I_C$, encore appelé bloc prédit $\hat{b}_C$.

On détermine ensuite, classiquement, un résidu d'erreur de prédiction, correspondant à la différence entre le bloc de l'image courante et le bloc prédit $\hat{b}_C$.

Finalement, au cours d'une étape 12, on insère dans un signal représentatif de la séquence d'images des informations de reconstruction des vecteurs de contrôle pour le bloc $b_C$.

Par exemple, ces informations de reconstruction prennent la forme d'indicateurs de connexion, représentatifs d'un mouvement entre le bloc $b_C$ et au moins un bloc voisin, ou comprennent directement les vecteurs de contrôle pour le bloc $b_C$.

On insère également dans le signal les résidus d'erreur de prédiction, qui pourront être utilisés par le décodeur lors de la reconstruction de la séquence d'image.

Le signal représentatif de la séquence d'images peut alors être transmis, et/ou stocké sur un support d'enregistrement.

*5.3 Signal*

Une fois codées, les images de la séquence sont transmises à un décodeur.

On insère de plus dans ce signal des informations de reconstruction des vecteurs de contrôle pour le bloc $b_C$. Par exemple, ces informations de reconstruction comprennent les indicateurs flag_lc et flag_tc.

Selon le mode de réalisation, on insère également dans le signal les résidus d'erreur de prédiction, et notamment le résidu de prédiction du vecteur mouvement v, qui seront utilisés par le décodeur lors de la reconstruction de la séquence d'image.

Il est également possible d'insérer un indicateur précisant le nombre de découpage qu'a subi le bloc $b_C$ au niveau du codeur. On s'assure de cette façon que le découpage effectué lors de la prédiction par le codeur est identique au découpage effectué lors de la prédiction par le décodeur.

*5.4 Décodage*

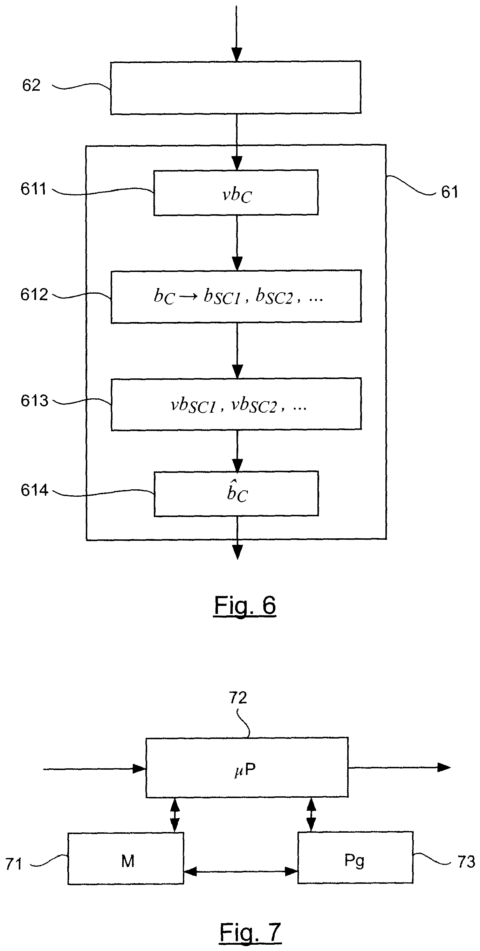

On présente désormais en relation avec la figure 6 les principales étapes de décodage, mises en oeuvre dans un décodeur vidéo de type H.264 par exemple.

Le procédé selon l'invention peut être mis en oeuvre de diverses manières, notamment sous forme câblée ou sous forme logicielle.

On suppose que le décodeur reçoit un signal représentatif d'une séquence d'images, codée par exemple selon le procédé de codage décrit précédemment.

Plus précisément, comme illustré en figure 6, le procédé de décodage selon l'invention comprend une étape 61 de reconstruction d'au moins une image de la séquence, à partir d'une prédiction de l'image à reconstruire et une étape d'obtention 62 d'informations de reconstruction des vecteurs de contrôle pour au moins un bloc donné $b_C$ de l'image à reconstruire ou d'une image de référence.

Selon cet exemple, on met en oeuvre les étapes suivantes, pour au moins le bloc donné $b_C$ de l'image à reconstruire ou d'une image de référence :

- détermination 611 d'une pluralité de vecteurs de contrôle $vb_C$ pour le bloc $b_C$, représentatifs chacun d'un déplacement entre un point caractéristique du bloc $b_C$ et sa position correspondante dans l'image de référence ou dans l'image à reconstruire, à partir des informations de reconstruction ;
- au moins un découpage 612 du bloc $b_C$ en sous-blocs $b_{SC1}$, $b_{SC2}$, etc ;
- détermination 613 d'une pluralité de vecteurs de contrôle $vb_{SC1}$, $vb_{SC2}$, etc pour les sous-blocs, à partir des vecteurs de contrôle pour le bloc ;
- détermination 614 d'une valeur de prédiction pour au moins un pixel de l'image à reconstruire, à partir d'une compensation en mouvement d'au moins un des sous-blocs, effectuée à partir des vecteurs de contrôle déterminés pour le sous-bloc.

On détermine de cette façon une prédiction d'au moins un bloc de l'image à reconstruire, encore appelé bloc prédit $\hat{b}_C$.

On ajoute ensuite, classiquement, le résidu d'erreur de prédiction déterminé au codage au bloc prédit, de façon à déterminer un bloc reconstruit de l'image à reconstruire.

Les étapes de détermination 611 d'une pluralité de vecteurs de contrôle pour le bloc, découpage 612 du bloc en sous-blocs, détermination 613 d'une pluralité de vecteurs de contrôle pour les sous-blocs, détermination 614 d'une valeur de prédiction pour au moins un pixel de l'image à reconstruire sont similaires à celles mises en oeuvre au codage, et ne sont donc pas décrites plus en détails.

En particulier, on peut noter que l'étape de détermination 611 d'une pluralité de vecteurs de contrôle $vb_C$ pour le bloc $b_C$ tient compte des informations de reconstruction obtenues au cours de l'étape 62.

Selon une première variante, ces informations de reconstruction prennent la forme d'au moins un indicateur de connexion, inséré dans le signal représentatif de la séquence d'image au codeur. Par exemple, ces informations de reconstruction comprennent l'indicateur flag_tc et l'indicateur flag_lc.

Selon une deuxième variante, ces informations de reconstruction prennent la forme des vecteurs de contrôle pour le bloc $b_C$, directement transmis dans le flux.

*5.5 Inversion du mouvement*

Comme indiqué précédemment, la technique proposée permet de coder/décoder la séquence d'images en utilisant des projections avant et/ou arrière.

Ainsi, le mouvement défini sur les blocs peut être inversé et permettre de réaliser un processus de codage/décodage par projection en avant (les vecteurs mouvement sont définis sur une image de référence) d'informations (prédiction dans l'image courante de valeurs de texture, de mouvement, ou de toute autre information utile, comme par exemple une information de profondeur pour un codeur vidéo 3D codant des informations de profondeur).

L'image reconstruite par inversion de mouvement est réalisée par l'intermédiaire du découpage en sous-blocs décrit précédemment. Cette image reconstruite peut être utilisée au codeur et/ou au décodeur.

*5.6 Structures du codeur et du décodeur*

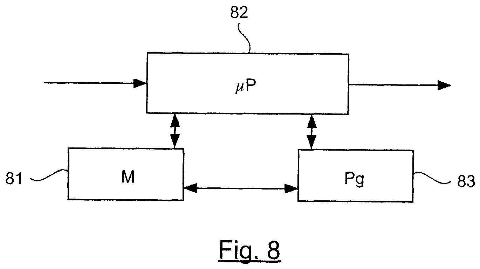

On présente finalement, en relation avec les figures 7 et 8, les structures simplifiées d'un dispositif de codage et d'un dispositif de décodage mettant respectivement en oeuvre en oeuvre une technique de codage et une technique de décodage telles que décrites ci-dessus.

Un dispositif de codage tel qu'illustré en figure 7 comprend une mémoire 71 comprenant une mémoire tampon, une unité de traitement 72, équipée par exemple d'un microprocesseur µP, et pilotée par le programme d'ordinateur 73, mettant en oeuvre le procédé de codage selon l'invention.

A l'initialisation, les instructions de code du programme d'ordinateur 73 sont par exemple chargées dans une mémoire RAM avant d'être exécutées par le processeur de l'unité de traitement 72. L'unité de traitement 72 reçoit en entrée au moins une image à coder ou un bloc d'une image à coder. Le microprocesseur de l'unité de traitement 72 met en oeuvre les étapes du procédé de codage décrit précédemment, selon les instructions du programme d'ordinateur 73, pour déterminer une prédiction de l'image ou du bloc à coder, et coder le bloc ou l'image correspondante. Pour cela, le dispositif de codage comprend, outre la mémoire tampon 71, des moyens de prédiction associant le bloc à au moins un bloc correspondant dans une image de référence de la séquence et des moyens d'insertion, dans un signal représentatif de la séquence, d'informations de reconstruction des vecteurs de contrôle pour le bloc, les moyens de prédiction comprenant des moyens de détermination d'une pluralité de vecteurs de contrôle pour le bloc, des moyens de découpage du bloc en sous-blocs, des moyens de détermination d'une pluralité de vecteurs de contrôle pour les sous-blocs, et des moyens de détermination d'une valeur de prédiction pour au moins un pixel de l'image courante. Ces moyens sont pilotés par le microprocesseur de l'unité de traitement 72.

Un dispositif de décodage tel qu'illustré en figure 8 comprend une mémoire 81 comprenant une mémoire tampon, une unité de traitement 82, équipée par exemple d'un microprocesseur µP, et pilotée par le programme d'ordinateur 83, mettant en oeuvre le procédé de décodage selon l'invention.

A l'initialisation, les instructions de code du programme d'ordinateur 83 sont par exemple chargées dans une mémoire RAM avant d'être exécutées par le processeur de l'unité de traitement 82. L'unité de traitement 82 reçoit en entrée un signal représentatif d'une séquence d'images comprenant des informations pour la reconstruction des vecteurs de contrôle associés à au moins un bloc donné. Le microprocesseur de l'unité de traitement 82 met en oeuvre les étapes du procédé de décodage décrit précédemment, selon les instructions du programme d'ordinateur 83, pour déterminer une prédiction du bloc donné, et reconstruire l'image correspondante. Pour cela, le dispositif de décodage comprend, outre la mémoire tampon 81, des moyens de reconstruction d'au moins une image de ladite séquence et des moyens d'obtention d'informations de reconstruction de vecteurs de contrôle pour au moins un bloc donné, les moyens de reconstruction comprenant des moyens de prédiction comprenant des moyens de détermination d'une pluralité de vecteurs de contrôle pour le bloc, des moyens de découpage du bloc en sous-blocs, des moyens de détermination d'une pluralité de vecteurs de contrôle pour les sous-blocs, des moyens de détermination d'une valeur de prédiction pour au moins un pixel de l'image à reconstruire. Ces moyens sont pilotés par le microprocesseur de l'unité de traitement 82.

## Revendications

1. Procédé de codage d'une séquence d'images, comprenant une étape de codage d'au moins un bloc d'une image courante de ladite séquence, mettant en oeuvre une prédiction (11) associant ledit bloc à au moins un bloc correspondant dans une image de référence de ladite séquence,
   **caractérisé en ce que** ladite prédiction (11) comprend les étapes suivantes, pour au moins un bloc donné de l'image courante ou de l'image de référence respectivement :

   - détermination (111) d'une pluralité de vecteurs de contrôle pour ledit bloc, lesdits vecteurs de contrôle étant représentatifs chacun d'un déplacement entre un point caractéristique dudit bloc et une position correspondante dudit point caractéristique dans l'image de référence ou dans l'image courante respectivement, et lesdits vecteurs de contrôle étant déterminés en tenant compte d'un vecteur de mouvement dudit bloc et d'au moins un indicateur de connexion représentatif d'un mouvement entre ledit bloc et au moins un bloc voisin dans lesdites image de référence et image courante, ledit au moins un indicateur de connexion indiquant si ledit bloc et ledit bloc voisin ont une arête commune à la fois dans l'image de référence et dans l'image courante après compensation en mouvement ;
   - au moins un découpage (112) dudit bloc en sous-blocs ;
   - détermination (113) d'une pluralité de vecteurs de contrôle pour lesdits sous-blocs, à partir des vecteurs de contrôle pour ledit bloc ;
   - détermination (114) d'une valeur de prédiction pour au moins un point de ladite image courante, à partir d'une compensation en mouvement d'au moins un desdits sous-blocs effectuée à partir des vecteurs de contrôle déterminés pour ledit sous-bloc ;

et **en ce que** ledit procédé comprend une étape d'insertion (12), dans un signal représentatif de ladite séquence, d'un résidu de prédiction du vecteur de mouvement du bloc et d'informations de reconstruction desdits vecteurs de contrôle pour ledit bloc donné, lesdites informations de reconstruction desdits vecteurs de contrôle comprenant le au moins un indicateur de connexion.

**2.** Procédé de codage selon la revendication 1, **caractérisé en ce que** lesdits indicateurs de connexion comprennent :

- un premier indicateur représentatif d'un mouvement entre ledit bloc donné et le bloc situé au-dessus dudit bloc donné, entre l'image courante et l'image de référence, et
- un deuxième indicateur représentatif d'un mouvement entre ledit bloc donné et le bloc situé à gauche dudit bloc donné, entre l'image courante et l'image de référence.

**3.** Procédé de codage selon la revendication 1, **caractérisé en ce que** lesdits vecteurs de contrôle pour ledit bloc ou sous-bloc sont associés chacun à un sommet dudit bloc ou sous-bloc.

**4.** Procédé de codage selon les revendications 2 et 3, dans lequel le vecteur de contrôle associé au coin situé en bas à droite dudit bloc donné est affecté dudit vecteur de mouvement du bloc, et

lorsque ledit deuxième indicateur indique que ledit bloc donné et le bloc situé à gauche dudit bloc donné sont connectés horizontalement:

- le vecteur de contrôle associé au coin situé en bas à gauche dudit bloc prend la valeur du vecteur de contrôle associé au coin situé en bas à droite dudit bloc situé à gauche dudit bloc donné, et
- lorsque ledit premier indicateur indique que ledit bloc donné et le bloc situé au-dessus dudit bloc donné sont connectés verticalement, le vecteur de contrôle associé au coin situé en haut à droite dudit bloc prend la valeur du vecteur de contrôle associé au coin situé en bas à droite dudit bloc situé au-dessus dudit bloc donné, et le vecteur de contrôle associé au coin situé en haut à gauche dudit bloc prend la valeur moyenne du vecteur de contrôle associé au coin situé en bas à gauche dudit bloc situé au-dessus dudit bloc donné et du vecteur de contrôle associé au coin situé en haut à droite dudit bloc situé à gauche dudit bloc donné,
- lorsque ledit premier indicateur indique que ledit bloc donné et le bloc situé au-dessus dudit bloc donné ne sont pas connectés verticalement, le vecteur de contrôle associé au coin situé en haut à gauche dudit bloc prend la valeur du vecteur de contrôle associé au coin situé en haut à droite dudit bloc situé à gauche dudit bloc donné, et le vecteur de contrôle associé au coin situé en haut à droite dudit bloc est obtenu par la somme du vecteur de contrôle associé au coin situé en haut à gauche dudit bloc donné et du vecteur de contrôle associé au coin situé en bas à droite dudit bloc donné à laquelle est soustraite le vecteur de contrôle associé au coin situé en bas à gauche dudit bloc donné,

lorsque ledit deuxième indicateur indique que ledit bloc donné et le bloc situé à gauche dudit bloc donné ne sont pas connectés horizontalement,

- et lorsque ledit premier indicateur indique que ledit bloc donné et le bloc situé au-dessus dudit bloc donné sont connectés verticalement:

- le vecteur de contrôle associé au coin situé en haut à droite dudit bloc prend la valeur du vecteur de contrôle associé au coin situé en bas à droite dudit bloc situé au-dessus dudit bloc donné,
- le vecteur de contrôle associé au coin situé en haut à gauche dudit bloc prend la valeur du vecteur de contrôle associé au coin situé en bas à gauche dudit bloc situé au-dessus dudit bloc donné,
- le vecteur de contrôle associé au coin situé en bas à gauche dudit bloc est obtenu par la somme du vecteur de contrôle associé au coin situé en haut à gauche dudit bloc donné et du vecteur de contrôle associé au coin situé en bas à droite dudit bloc donné à laquelle est soustraite le vecteur de contrôle associé au coin situé en haut à droite dudit bloc donné

- et lorsque ledit premier indicateur indique que ledit bloc donné et le bloc situé au-dessus dudit bloc donné ne sont pas connectés verticalement, le vecteur de contrôle associé au coin situé en haut à gauche dudit bloc donné, le vecteur de contrôle associé au coin situé en haut à droite dudit bloc donné et le vecteur de contrôle associé au coin situé en bas à gauche dudit bloc donné prennent la valeur du vecteur de contrôle associé au coin situé en bas à droite dudit bloc donné.

**5.** Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé de codage selon l'une quelconque des revendications 1 à 4 lorsque le programme est exécuté par un processeur.

**6.** Dispositif de codage d'une séquence d'images, comprenant des moyens de codage d'au moins un bloc d'une image courante de ladite séquence, mettant en oeuvre des moyens de prédiction (11) associant ledit bloc à au moins un bloc correspondant dans une image de référence de ladite séquence,
**caractérisé en ce que** lesdits moyens de prédiction (11) comprennent, pour au moins un bloc donné de l'image courante ou de l'image de référence respectivement :

- des moyens de détermination (111) d'une pluralité de vecteurs de contrôle pour ledit bloc, lesdits vecteurs de contrôle étant représentatifs chacun d'un déplacement entre un point caractéristique dudit bloc et une position correspondante dudit point caractéristique dans l'image de référence ou dans l'image courante respectivement, et lesdits vecteurs de contrôle étant déterminés en tenant compte d'un vecteur de mouvement dudit bloc et d'au moins un indicateur de connexion représentatif d'un mouvement entre ledit bloc et au moins un bloc voisin dans lesdites image de référence et image courante, ledit au moins un indicateur de connexion indiquant si ledit bloc et ledit bloc voisin ont une arête commune à la fois dans l'image de référence et dans l'image courante après compensation en mouvement ;
- des moyens de découpage (112) dudit bloc en sous-blocs ;
- des moyens de détermination (113) d'une pluralité de vecteurs de contrôle pour lesdits sous-blocs, à partir des vecteurs de contrôle pour ledit bloc ;
- des moyens de détermination (114) d'une valeur de prédiction pour au moins un point de ladite image courante, à partir d'une compensation en mouvement d'au moins un desdits sous-blocs effectuée à partir des vecteurs de contrôle déterminés pour ledit sous-bloc ;

et **en ce que** ledit dispositif comprend des moyens d'insertion (12), dans un signal représentatif de ladite séquence, d'un résidu de prédiction du vecteur de mouvement du bloc et d'informations de reconstruction desdits vecteurs de contrôle pour ledit bloc donné, lesdites informations de reconstruction desdits vecteurs de contrôle comprenant le au moins un indicateur de connexion.

**7.** Signal représentatif d'une séquence d'images codée selon le procédé de codage de l'une quelconque des revendications 1 à 4,
**caractérisé en ce qu'**il comprend un résidu de prédiction du vecteur de mouvement du bloc donné et au moins une information de reconstruction desdits vecteurs de contrôle pour ledit bloc donné comprenant au moins un indicateur de connexion représentatif d'un mouvement entre ledit bloc donné et au moins un bloc voisin, ledit au moins un indicateur de connexion indiquant si ledit bloc et ledit bloc voisin ont une arête commune à la fois dans l'image de référence et dans l'image courante après compensation en mouvement.

**8.** Procédé de décodage d'un signal représentatif d'une séquence d'images, comprenant une étape de reconstruction (61) d'au moins une image de ladite séquence, à partir d'une prédiction de l'image à reconstruire,
ladite prédiction associant un bloc de l'image à reconstruire à au moins un bloc correspondant dans une image de référence de ladite séquence,
**caractérisé en ce qu'**il comprend, pour au moins un bloc donné de l'image à reconstruire ou de l'image de référence respectivement, une étape d'obtention (62) d'un vecteur de mouvement du bloc et d'informations de reconstruction de vecteurs de contrôle, lesdites informations de reconstruction desdits vecteurs de contrôle comprenant au moins un indicateur de connexion représentatif d'un mouvement entre ledit bloc et au moins un bloc voisin dans lesdites image de référence et image à reconstruire, ledit au moins un indicateur de connexion indiquant si ledit bloc et ledit bloc voisin ont une arête commune à la fois dans l'image de référence et dans l'image à reconstruire après compensation en mouvement,
et **en ce que** ladite prédiction comprend les étapes suivantes, pour ledit bloc donné :

- détermination (611) d'une pluralité de vecteurs de contrôle pour ledit bloc, représentatifs chacun d'un déplacement entre un point caractéristique dudit bloc et une position correspondante dudit point caractéristique dans l'image de référence ou dans l'image à reconstruire respectivement, à partir du vecteur de mouvement du bloc et du au moins un indicateur de connexion ;
- au moins un découpage (612) dudit bloc en sous-blocs ;
- détermination (613) d'une pluralité de vecteurs de contrôle pour lesdits sous-blocs, à partir des vecteurs de contrôle pour ledit bloc ;
- détermination (614) d'une valeur de prédiction pour au moins un point de ladite image à reconstruire, à partir d'une compensation en mouvement d'au moins un desdits sous-blocs, effectuée à partir des vecteurs de contrôle déterminés pour ledit sous-bloc.

9. Procédé de décodage selon la revendication 8, **caractérisé en ce qu'**il comprend une étape de décision et/ou de paramétrage dudit découpage selon un critère prédéterminé appartenant au groupe comprenant :

- un nombre prédéfini de sous-blocs pour ledit bloc ;
- une information de similitude entre lesdits vecteurs de contrôle ;
- une taille dudit bloc ;
- un indicateur représentatif d'un nombre de découpage.

10. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé de décodage selon l'une quelconque des revendications 8 à 9 lorsque le programme est exécuté par un processeur.

11. Dispositif de décodage d'un signal représentatif d'une séquence d'images, comprenant des moyens de reconstruction (61) d'au moins une image de ladite séquence, mettant en oeuvre des moyens de prédiction de l'image à reconstruire, lesdits moyens de prédiction associant un bloc de l'image à reconstruire à au moins un bloc correspondant dans une image de référence de ladite séquence,
**caractérisé en ce qu'**il comprend, pour au moins un bloc donné de l'image à reconstruire ou de l'image de référence respectivement, des moyens d'obtention (62) d'un vecteur de mouvement du bloc et d'informations de reconstruction de vecteurs de contrôle, lesdites informations de reconstruction desdits vecteurs de contrôle comprenant au moins un indicateur de connexion représentatif d'un mouvement entre ledit bloc et au moins un bloc voisin dans lesdites image de référence et image à reconstruire, ledit au moins un indicateur de connexion indiquant si ledit bloc et ledit bloc voisin ont une arête commune à la fois dans l'image de référence et dans l'image à reconstruire après compensation en mouvement,
et **en ce que** lesdits moyens de prédiction comprennent, pour ledit bloc donné :

- des moyens de détermination (611) d'une pluralité de vecteurs de contrôle pour ledit bloc, représentatifs chacun d'un déplacement entre un point caractéristique dudit bloc et une position correspondante dudit point caractéristique dans l'image de référence ou dans l'image à reconstruire respectivement, à partir du vecteur de mouvement du bloc et du au moins un indicateur de connexion;
- des moyens de découpage (612) dudit bloc en sous-blocs ;
- des moyens de détermination (613) d'une pluralité de vecteurs de contrôle pour lesdits sous-blocs, à partir des vecteurs de contrôle pour ledit bloc ;
- des moyens de détermination (614) d'une valeur de prédiction pour au moins un point de ladite image à reconstruire, à partir d'une compensation en mouvement d'au moins un desdits sous-blocs, effectuée, à partir des vecteurs de contrôle déterminés pour ledit sous-bloc.

**Patentansprüche**

1. Kodierverfahren einer Sequenz von Bildern, das einen Schritt des Kodierens mindestens eines Blocks eines aktuellen Bilds der Sequenz umfasst, das eine Vorhersage (11) umsetzt, die den Block mit mindestens einem entsprechenden Block in einem Referenzbild der Sequenz assoziiert,
**dadurch gekennzeichnet, dass** die Vorhersage (11) die folgenden Schritte für mindestens einen gegebenen Block des aktuellen Bilds bzw. des Referenzbilds umfasst:

- Bestimmen (111) einer Mehrzahl von Steuervektoren für den Block, wobei die Steuervektoren jeweils für eine Verlagerung zwischen einem charakteristischen Punkt des Blocks und einer entsprechenden Position des charakteristischen Punkts jeweils in dem Referenzbild oder in dem aktuellen Bild repräsentativ sind, und die Steuervektoren unter Berücksichtigung eines Bewegungsvektors des Blocks und mindestens eines Verbindungsindikators, der für eine Bewegung zwischen dem Block und mindestens einem benachbarten Block in dem Referenzbild und dem aktuellen Bild repräsentativ ist, bestimmt werden, wobei der mindestens eine Verbindungsindikator angibt, ob der Block und der benachbarte Block eine gemeinsame Kante sowohl in dem Referenzbild als auch in dem aktuellen Bild nach Bewegungskompensation aufweisen;
- mindestens ein Aufteilen (112) des Blocks in Unterblöcke;
- Bestimmen (113) einer Vielzahl von Steuervektoren für die Unterblöcke ausgehend von den Steuervektoren für den Block;
- Bestimmen (114) eines Vorhersagewerts für mindestens einen Punkt des aktuellen Bilds ausgehend von einer Bewegungskompensation mindestens eines der Unterblöcke, die ausgehend von den Steuervektoren, die für den Unterblock bestimmt werden, ausgeführt wird;

und dass das Verfahren einen Schritt (12) des Einfügens in ein Signal, das für die Sequenz repräsentativ ist, eines Vorhersagerests des Bewegungsvektors des Blocks und von Rekonstruktionsinformationen der Steuervektoren für den gegebenen Block umfasst, wobei die Rekonstruktionsinformationen der Steuervektoren den mindestens einen Verbindungsindikator umfassen.

2. Kodierverfahren nach Anspruch 1, **dadurch gekennzeichnet, dass** die Verbindungsindikatoren Folgendes umfassen:

- einen ersten Indikator, der für eine Bewegung zwischen dem gegebenen Block und dem Block, der oberhalb des gegebenen Blocks zwischen dem aktuellen Bild und dem Referenzbild liegt, repräsentativ ist, und
- einen zweiten Indikator, der für eine Bewegung zwischen dem gegebenen Block und dem Block, der links von dem gegebenen Block zwischen dem aktuellen Bild und dem Referenzbild liegt, repräsentativ ist.

3. Kodierverfahren nach Anspruch 1, **dadurch gekennzeichnet, dass** die Steuervektoren für den Block oder Unterblock jeweils mit einem Scheitel des Blocks oder Unterblocks assoziiert sind.

4. Kodierverfahren nach den Ansprüchen 2 und 3, wobei der Steuervektor, der mit der Ecke assoziiert ist, die unten rechts von dem gegebenen Block liegt, dem Bewegungsvektor des Blocks zugewiesen ist, und wenn der zweite Indikator angibt, dass der gegebene Block und der Block, der links von dem gegebenen Block liegt, horizontal verbunden sind:

- der Steuervektor, der mit der Ecke assoziiert ist, die unten links von dem Block liegt, den Wert des Steuervektors annimmt, der mit der Ecke assoziiert ist, die unten rechts von dem Block liegt, der links von dem gegebenen Block liegt, und
- wenn der erste Indikator angibt, dass der gegebene Block und der Block, der oberhalb des gegebenen Blocks liegt, vertikal verbunden sind, der Steuervektor, der mit der Ecke assoziiert ist, die oben rechts von dem Block liegt, den Wert des Steuervektors annimmt, der mit der Ecke assoziiert ist, die unten rechts von dem Block liegt, der oberhalb des gegebenen Blocks liegt, und der Steuervektor, der mit der Ecke assoziiert ist, die oben links von dem Block liegt, den Mittelwert des Steuervektors annimmt, der mit der Ecke assoziiert ist, die unten links von dem Block liegt, der oberhalb des gegebenen Blocks liegt, und des Steuervektors, der mit der Ecke assoziiert ist, die oben rechts von dem Block liegt, der links von dem gegebenen Block liegt,
- wenn der erste Indikator angibt, dass der gegebene Block und der Block, der oberhalb des gegebenen Blocks liegt, nicht vertikal verbunden sind, der Steuervektor, der mit der Ecke assoziiert ist, die oben links von dem Block liegt, den Wert des Steuervektors annimmt, der mit der Ecke assoziiert ist, die oben rechts von dem Block liegt, der links von dem gegebenen Block liegt, und der Steuervektor, der mit der Ecke assoziiert ist, die oben rechts von dem Block liegt, durch die Summe des Steuervektors erhalten wird, der mit der Ecke assoziiert ist, die oben links von dem gegebenen Block liegt und des Steuervektors, der mit der Ecke assoziiert ist, die unten rechts von dem gegebenen Block liegt, von welcher der Steuervektor abgezogen wird, der mit der Ecke assoziiert ist, die unten links von dem gegebenen Block liegt,

wenn der zweite Indikator angibt, dass der gegebene Block und der Block, der links von dem gegebenen Block liegt, nicht horizontal verbunden sind,

- und wenn der erste Indikator angibt, dass der gegebene Block und der Block, der oberhalb von dem gegebenen Block liegt, vertikal verbunden sind:
- der Steuervektor, der mit der Ecke assoziiert ist, die oben rechts von dem Block liegt, den Wert des Steuervektors annimmt, der mit der Ecke assoziiert ist, die unten rechts von dem Block liegt, der oberhalb von dem gegebenen Block liegt,
- der Steuervektor, der mit der Ecke assoziiert ist, die oben links von dem Block liegt, den Wert des Steuervektors annimmt, der mit der Ecke assoziiert ist, die unten links von dem Block liegt, der oberhalb von dem gegebenen Block liegt,
- der Steuervektor, der mit der Ecke assoziiert ist, die unten links von dem Block liegt, durch die Summe des Steuervektors erhalten wird, der mit der Ecke assoziiert ist, die oben links von dem gegebenen Block liegt und des Steuervektors, der mit der Ecke assoziiert ist, die unten rechts von dem gegebenen Block liegt, wovon der Steuervektor abgezogen wird, der mit der Ecke assoziiert ist, die oben links von dem gegebenen Block liegt
- und, wenn der erste Indikator angibt, dass der gegebene Block und der Block, der oberhalb des gegebenen Blocks liegt, nicht vertikal verbunden sind, der Steuervektor, der mit der Ecke assoziiert ist, die oben links von dem gegebenen Block liegt, der Steuervektor, der mit der Ecke assoziiert ist, die oben rechts von dem gegebenen Block liegt, und der Steuervektor, der mit der Ecke assoziiert ist, die unten links von dem gegebenen Block liegt, den Wert des Steuervektors annehmen, der mit der Ecke assoziiert ist, die unten rechts von dem gegebenen Block liegt.

5. Computerprogrammprodukt, das von einem Kommunikationsnetzwerk heruntergeladen und/oder auf einem Träger aufgezeichnet werden kann, der von einem Computer lesbar ist, und/oder von einem Prozessor ausführbar ist, **dadurch gekennzeichnet, dass** es Programmcodeanweisungen für die Umsetzung des Kodierverfahrens nach einem der Ansprüche 1 bis 4, wenn das Programm durch einen Prozessor ausgeführt wird, umfasst.

6. Kodierverfahren einer Sequenz von Bildern, das Mittel zum Kodieren mindestens eines Blocks eines aktuellen Bilds der Sequenz umfasst, die Vorhersagemittel (11) umsetzen, die den Block mit mindestens einem entsprechenden Block in einem Referenzbild der Sequenz assoziieren, **dadurch gekennzeichnet, dass** die Vorhersagemittel (11) für mindestens einen gegebenen Block des aktuellen Bilds oder des Referenzbilds jeweils Folgendes umfassen:

- Mittel zum Bestimmen (111) einer Vielzahl von Steuervektoren für den Block,

wobei die Steuervektoren jeweils für eine Verlagerung zwischen einem charakteristischen Punkt des Blocks und einer entsprechenden Position des charakteristischen Punkts jeweils in dem Referenzbild oder in dem aktuellen Bild repräsentativ sind, und die Steuervektoren unter Berücksichtigung eines Bewegungsvektors des Blocks und mindestens eines Verbindungsindikators, der für eine Bewegung zwischen dem Block und dem mindestens einen benachbarten Block in dem Referenzbild und dem aktuellen Bild repräsentativ ist, bestimmt werden, wobei der mindestens eine Verbindungsindikator angibt, ob der Block und der benachbarte Block eine gemeinsame Kante sowohl in dem Referenzbild als auch in dem aktuellen Bild nach Bewegungskompensation aufweisen;

- Mittel zum Aufteilen (112) des Blocks in Unterblöcke;
- Mittel zum Bestimmen (113) einer Vielzahl von Steuervektoren für die Unterblöcke ausgehend von den Steuervektoren für den Block;
- Mittel zum Bestimmen (114) eines Vorhersagewerts für mindestens einen Punkt des aktuellen Bilds ausgehend von einer Bewegungskompensation mindestens eines der Unterblöcke, die ausgehend von den Steuervektoren, die für den Unterblock bestimmt werden, ausgeführt wird;

und dass die Vorrichtung Mittel zum Einfügen (12) in ein Signal, das für die Sequenz repräsentativ ist, eines Vorhersagerests des Bewegungsvektors des Blocks und von Rekonstruktionsinformationen der Steuervektoren für den gegebenen Block umfasst, wobei die Rekonstruktionsinformationen der Steuervektoren den mindestens einen Verbindungsindikator umfassen.

7. Signal, das für eine Sequenz von Bildern repräsentativ ist, die gemäß dem Kodierverfahren eines der Ansprüche 1 bis 4 kodiert ist, **dadurch gekennzeichnet, dass** es einen Vorhersagerest des Bewegungsvektors des gegebenen Blocks und mindestens eine Rekonstruktionsinformation der Steuervektoren für den gegebenen Block umfasst, der mindestens einen Verbindungsindikator umfasst, der für eine Bewegung zwischen dem gegebenen Block und mindestens einem benachbarten Block repräsentativ ist, wobei der mindestens eine Verbindungsindikator angibt, ob der Block und der benachbarte Block eine gemeinsame Kante sowohl in dem Referenzbild als auch in dem aktuellen Bild nach Bewegungskompensation aufweisen.

8. Verfahren zum Dekodieren eines Signals, das für eine Sequenz von Bildern repräsentativ ist, das einen Rekonstruktionsschritt (61) mindestens eines Bilds der Sequenz ausgehend von einer Vorhersage des zu rekonstruierenden Bilds umfasst, wobei die Vorhersage einen Block des zu rekonstruierenden Bilds mit mindestens einem entsprechenden Block in dem Referenzbild der Sequenz assoziiert,

**dadurch gekennzeichnet, dass** es für mindestens einen gegebenen Block des zu rekonstruierenden Bilds oder des Referenzbilds einen Schritt des Erhaltens (62) eines Bewegungsvektors des Blocks und von Rekonstruktionsinformationen von Steuervektoren umfasst, wobei die Rekonstruktionsinformationen der Steuervektoren mindestens einen Verbindungsindikator umfassen, der für eine Bewegung zwischen dem Block und mindestens einem benachbarten Block in dem Referenzbild und dem zu rekonstruierenden Bild repräsentativ ist, wobei der mindestens eine Verbindungsindikator angibt, ob der Block und der benachbarte Block eine gemeinsame Kante sowohl in dem Referenzbild als auch in dem zu rekonstruierenden Bild nach Bewegungskompensation aufweisen, und dass die Vorhersage die folgenden Schritte für den gegebenen Block umfasst:

- Bestimmen (611) einer Vielzahl von Steuervektoren für den Block, die jeweils für eine Verlagerung zwischen einem charakteristischen Punkt des Blocks und einer entsprechenden Position des charakteristischen Punkts jeweils in dem Referenzbild oder in dem zu rekonstruierenden Bild repräsentativ sind, ausgehend von dem Bewegungsvektor des Blocks und des mindestens einen Verbindungsindikators;
- mindestens ein Aufteilen (612) des Blocks in Unterblöcke;
- Bestimmen (613) einer Vielzahl von Steuervektoren für die Unterblöcke ausgehend von den Steuervektoren für den Block;
- Bestimmen (614) eines Vorhersagewerts für mindestens einen Punkt des zu rekonstruierenden Bilds ausgehend von einer Bewegungskompensation mindestens eines der Unterblöcke, die ausgehend von den Steuervektoren, die für den Unterblock bestimmt werden, ausgeführt wird.

9. Dekodierungsverfahren nach Anspruch 8, **dadurch gekennzeichnet, dass** es einen Entscheidungs- und/oder Parametrierungsschritt des Aufteilens gemäß einem vorbestimmten Kriterium umfasst, das zu einer Gruppe gehört, die Folgendes umfasst:

- eine vordefinierte Zahl von Unterblöcken für den Block;
- eine Ähnlichkeitsinformation zwischen den Steuervektoren;
- eine Größe des Blocks;
- einen Indikator, der für eine Aufteilungszahl repräsentativ ist.

10. Computerprogrammprodukt, das von einem Kommunikationsnetzwerk heruntergeladen und/oder auf einem Träger aufgezeichnet werden kann, der von einem Computer lesbar ist, und/oder von einem Prozessor ausführbar ist, **dadurch gekennzeichnet, dass** es Programmcodeanweisungen für die Umsetzung des Dekodierverfahrens nach einem der Ansprüche 8 bis 9, wenn das Programm durch einen Prozessor ausgeführt wird, umfasst.

11. Dekodierverfahren eines Signals, das für eine Sequenz von Bildern repräsentativ ist, das Mittel zum Rekonstruieren (61) mindestens eines Bilds der Sequenz umfasst, die Vorhersagemittel des zu rekonstruierenden Bilds umsetzt, wobei die Vorhersagemittel einen Block des zu rekonstruierenden Bilds mit mindestens einem entsprechenden Block in einem Referenzbild der Sequenz assoziieren,

**dadurch gekennzeichnet, dass** es für mindestens einen gegebenen Block jeweils des zu rekonstruierenden Bilds oder des Referenzbilds Mittel zum Erhalten (62) eines Bewegungsvektors des Blocks und von Rekonstruktionsinformationen von Steuervektoren umfasst, wobei die Rekonstruktionsinformationen der Steuervektoren mindestens einen Verbindungsindikator umfassen, der für eine Bewegung zwischen dem Block und mindestens einem benachbarten Block in dem Referenzbild und dem zu rekonstruierenden Bild repräsentativ sind, wobei der mindestens eine Verbindungsindikator angibt, ob der Block und der benachbarte Block eine gemeinsame Kante sowohl in dem Referenzbild als auch in dem zu rekonstruierenden Bild nach Bewegungskompensation aufweisen, und dass die Vorhersagemittel die folgenden Schritte für den gegebenen Block umfassen:

- Mittel zum Bestimmen (611) einer Vielzahl von Steuervektoren für den Block, die jeweils für eine Verlagerung zwischen einem charakteristischen Punkt des Blocks und einer entsprechenden Position des charakteristischen Punkts jeweils in dem Referenzbild oder in dem zu rekonstruierenden Bild repräsentativ sind, ausgehend von dem Bewegungsvektor des Blocks und des mindestens einen Verbindungsindikators;
- Mittel zum Aufteilen (612) des Blocks in Unterblöcke;
- Mittel zum Bestimmen (613) einer Vielzahl von Steuervektoren für die Unterblöcke ausgehend von den Steuervektoren für den Block;
- Mittel zum Bestimmen (614) eines Vorhersagewerts für mindestens einen Punkt des zu rekonstruierenden Bilds ausgehend von einer Bewegungskompensation mindestens eines der Unterblöcke, die ausgehend von den Steuervektoren, die für den Unterblock bestimmt werden, ausgeführt wird.

**Claims**

1. Method for coding a sequence of images, comprising a step of coding at least one block of a current image of said sequence, implementing a prediction (11) associating said block with at least one corresponding block in a reference image of said sequence, **characterized in that** said prediction (11) comprises the following steps, for at least one given block of the current image or of the reference image, respectively:

    - determining (111) a plurality of control vectors for said block, said control vectors each being representative of a motion between a characteristic point of said block and a corresponding position of said characteristic point in the reference image or in the current image, respectively, and said control vectors being determined while taking into account a motion vector of said block and of at least one connection indicator representative of a motion between said block and at least one neighbouring block in said reference image and current image, said at least one connection indicator indicating whether said block and said neighbouring block have a common edge both in the reference image and in the current image after motion compensation;
    - at least once dividing (112) said block into sub-blocks;
    - determining (113) a plurality of control vectors for said sub-blocks, on the basis of the control vectors for said block;
    - determining (114) a prediction value for at least one point of said current image, on the basis of a motion compensation of at least one of said sub-blocks, which compensation is carried out on the basis of the control vectors determined for said sub-block;

    and **in that** said method comprises a step of inserting (12), into a signal representative of said sequence, a prediction residue of the motion vector of the block and items of information for reconstructing said control vectors for said given block, said items of information for reconstructing said control vectors comprising the at least one connection indicator.

2. Coding method according to Claim 1, **characterized in that** said connection indicators comprise:

    - a first indicator representative of a motion between said given block and the block located above said given block, between the current image and the reference image, and
    - a second indicator representative of a motion between said given block and the block located to the left of said given block, between the current image and the reference image.

3. Coding method according to Claim 1, **characterized in that** said control vectors for said block or sub-block are each associated with a vertex of said block or sub-block.

4. Coding method according to Claims 2 and 3, wherein the control vector associated with the corner located at the bottom right of said given block is assigned said motion vector of the block, and
    when said second indicator indicates that said given block and the block located to the left of said given block are connected horizontally:

    - the control vector associated with the corner located at the bottom left of said block takes the value of the control vector associated with the corner located at the bottom right of said block located to the left of said given block, and
    - when said first indicator indicates that said given block and the block located above said given block are connected vertically, the control vector associated with the corner located at the top right of said block takes the value of the control vector associated with the corner located at the bottom right of said block located above said given block, and the control vector associated with the corner located at the top left of said block takes the average value of the control vector associated with the corner located at the bottom left of said block located above said given block and of the control vector associated with the corner located at the top right of said block located to the left of said given block,
    - when said first indicator indicates that said given block and the block located above said given block are not connected vertically, the control vector associated with the corner located at the top left of said block takes the value of the control vector associated with the corner located at the top right of said block located to the left of said given block, and the control vector associated with the corner located at the top right of said block is obtained by calculating the sum of the control vector associated with the corner located at the top left of said given block and of the control vector associated with the corner located at the bottom right of said given block, from which sum is subtracted the control vector associated with the corner located at the bottom left of said given block,

when said second indicator indicates that said given block and the block located to the left of said given block are not connected horizontally,

- and when said first indicator indicates that said given block and the block located above said given block are connected vertically:

- the control vector associated with the corner located at the top right of said block takes the value of the control vector associated with the corner located at the bottom right of said block located above said given block,
- the control vector associated with the corner located at the top left of said block takes the value of the control vector associated with the corner located at the bottom left of said block located above said given block,
- the control vector associated with the corner located at the bottom left of said block is obtained by calculating the sum of the control vector associated with the corner located at the top left of said given block and of the control vector associated with the corner located at the bottom right of said given block, from which sum is subtracted the control vector associated with the corner located at the top left of said given block,

- and when said first indicator indicates that said given block and the block located above said given block are not connected vertically, the control vector associated with the corner located at the top left of said given block, the control vector associated with the corner located at the top right of said given block and the control vector associated with the corner located at the bottom left of said given block take the value of the control vector associated with the corner located at the bottom right of said given block.

5. Computer-program product downloadable from a communication network and/or stored on a medium that is computer-readable and/or executable by a processor, **characterized in that** it comprises program-code instructions for implementing the coding method according to any one of Claims 1 to 4 when the program is executed by a processor.

6. Device for coding a sequence of images, comprising means for coding at least one block of a current image of said sequence, implementing predicting means (11) that associate said block with at least one corresponding block in a reference image of said sequence,
**characterized in that** said predicting means (11) comprise, for at least one given block of the current image or of the reference image, respectively:

- means for determining (111) a plurality of control vectors for said block, said control vectors each being representative of a motion between a characteristic point of said block and a corresponding position of said characteristic point in the reference image or in the current image, respectively, and said control vectors being determined while taking into account a motion vector of said block and of at least one connection indicator representative of a motion between said block and at least one neighbouring block in said reference image and current image, said at least one connection indicator indicating whether said block and said neighbouring block have a common edge both in the reference image and in the current image after motion compensation;
- means for dividing (112) said block into sub-blocks;
- means for determining (113) a plurality of control vectors for said sub-blocks, on the basis of control vectors for said block;
- means for determining (114) a prediction value for at least one point of said current image, on the basis of a motion compensation of at least one of said sub-blocks, which compensation is carried out on the basis of the control vectors determined for said sub-block;

and **in that** said device comprises means for inserting (12), into a signal representative of said sequence, a prediction residue of the motion vector of the block and items of information for reconstructing said control vectors for said given block, said items of information for reconstructing said control vectors comprising the at least one connection indicator.

7. Signal representative of an image sequence coded using the coding method of any one of Claims 1 to 4, **characterized in that** it comprises a prediction residue of the motion vector of the given block and at least one item of information for reconstructing said control vectors for said given block comprising at least one connection indicator representative of a motion between said given block and at least one neighbouring block, said at least one connection indicator indicating whether said block and said neighbouring block have a common edge both in the reference image and in the current image after motion compensation.

8. Method for decoding a signal representative of an image sequence, comprising a step of reconstructing (61) at least one image of said sequence, on the basis of a prediction of the image to be reconstructed,

said prediction associating one block of the image to be reconstructed with at least one corresponding block in a reference image of said sequence,

**characterized in that** it comprises, for at least one given block of the image to be reconstructed or of the reference image, respectively, a step of obtaining (62) a motion vector of the block and items of information for reconstructing control vectors, said items of information for reconstructing said control vectors comprising at least one connection indicator representative of a motion between said block and at least one neighbouring block in said reference image and image to be reconstructed, said at least one connection indicator indicating whether said block and said neighbouring block have a common edge both in the reference image and in the image to be reconstructed after motion compensation,

and **in that** said prediction comprises the following steps, for said given block:

- determining (611) a plurality of control vectors for said block, said control vectors each being representative of a motion between a characteristic point of said block and a corresponding position of said characteristic point in the reference image or in the image to be reconstructed, respectively, on the basis of the motion vector of the block and of the at least one connection indicator;
- at least once dividing (612) said block into sub-blocks;
- determining (613) a plurality of control vectors for said sub-blocks, on the basis of control vectors for said block;
- determining (614) a prediction value for at least one point of said image to be reconstructed, on the basis of a motion compensation of at least one of said sub-blocks, which compensation is carried out on the basis of the control vectors determined for said sub-block.

9. Decoding method according to Claim 8, **characterized in that** it comprises a step of parameterizing and/or deciding how to perform said division depending on a predetermined criterion belonging to the group comprising:

- a predefined number of sub-blocks for said block;
- an item of information on the similarity of said control vectors;
- a size of said block;
- an indicator representative of a division number.

10. Computer-program product downloadable from a communication network and/or stored on a medium that is computer-readable and/or executable by a processor, **characterized in that** it comprises program-code instructions for implementing the decoding method according to any one of Claims 8 to 9 when the program is executed by a processor.

11. Device for decoding a signal representative of an image sequence, comprising means for reconstructing (61) at least one image of said sequence, implementing means for predicting the image to be reconstructed, said predicting means associating one block of the image to be reconstructed with at least one corresponding block in a reference image of said sequence,

**characterized in that** it comprises, for at least one given block of the image to be reconstructed or of the reference image, respectively, means for obtaining (62) a motion vector of the block and items of information for reconstructing control vectors, said items of information for reconstructing said control vectors comprising at least one connection indicator representative of a motion between said block and at least one neighbouring block in said reference image and image to be reconstructed, said at least one connection indicator indicating whether said block and said neighbouring block have a common edge both in the reference image and in the image to be reconstructed after motion compensation,

and **in that** said predicting means comprise, for said given block:

- means for determining (611) a plurality of control vectors for said block, said control vectors each being representative of a motion between a characteristic point of said block and a corresponding position of said characteristic point in the reference image or in the image to be reconstructed, respectively, on the basis of the motion vector of the block and of the at least one connection indicator;
- means for dividing (612) said block into sub-blocks;
- means for determining (613) a plurality of control vectors for said sub-blocks, on the basis of control vectors for said block;

- means for determining (614) a prediction value for at least one point of said image to be reconstructed, on the basis of a motion compensation of at least one of said sub-blocks, which compensation is carried out on the basis of the control vectors determined for said sub-block.

$b_C$

111    $vb_C$

11

112    $b_C \rightarrow b_{SC1}, b_{SC2}, \ldots$

113    $vb_{SC1}, vb_{SC2}, \ldots$

114    $\hat{b}_C$

<u>Fig. 1A</u>

11

12

<u>Fig. 1B</u>

```
                            ┌──────────────┐   21
                            │   vbr = v    │
                            └──────────────┘
                                   │          22
                          Y  ╱◇◇◇◇◇◇◇◇◇◇◇◇◇╲  N
                    ┌────────┤  flag_lc=1 ?  ├────────┐
                    │        ╲◇◇◇◇◇◇◇◇◇◇◇◇◇╱           │
             231    │                                  │  232
              Y ╱◇◇◇◇◇◇◇◇◇◇╲ N              Y ╱◇◇◇◇◇◇◇◇◇◇╲ N
          ┌────┤ flag_tc=1 ? ├────┐     ┌────┤ flag_tc=1 ? ├────┐
          │    ╲◇◇◇◇◇◇◇◇◇◇╱        │     │    ╲◇◇◇◇◇◇◇◇◇◇╱        │
          │                       │     │                       │
```

$v_{bl} = v_{br}(\text{left\_bloc})$

$v_{tr} = v_{br}(\text{top\_bloc})$

$v_{tl} = \text{moy}[v_{tr}(\text{left\_bloc}), v_{bl}(\text{top\_bloc})]$

$v_{bl} = v_{br}(\text{left\_bloc})$

$v_{tl} = v_{tr}(\text{left\_bloc})$

$v_{tr} = v_{tl} + v_{br} - v_{bl}$

$v_{tr} = v_{br}(\text{top\_bloc})$

$v_{tl} = v_{bl}(\text{top\_bloc})$

$v_{bl} = v_{tl} + v_{br} - v_{tr}$

$v_{bl} = v$

$v_{tl} = v$

$v_{tr} = v$

<u>Fig. 2</u>

$b_C$

$I_C$

$I_R$

**Fig. 3A**

$b_C$

$I_C$

$I_R$

**Fig. 3B**

$b_C$

$I_C$

$I_R$

**Fig. 3C**

$b_C$

$I_C$

$I_R$

**Fig. 3D**

$b_C$

$I_C$

$I_R$

**Fig. 3E**

$b_C$

$I_C$

$I_R$

**Fig. 3F**

Fig. 3G

Fig. 4

Fig. 5

62 —

611 —  $vb_C$  — 61

612 —  $b_C \rightarrow b_{SC1}, b_{SC2}, \dots$

613 —  $vb_{SC1}, vb_{SC2}, \dots$

614 —  $\hat{b}_C$

Fig. 6

72

← →  $\mu P$  →

71 —  M   Pg  — 73

Fig. 7

82

μP

81   M                    Pg   83

<u>Fig. 8</u>

**EP 2 304 962 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6058212 A

- FR 0756007

**Littérature non-brevet citée dans la description**

- **P. ISHWAR ; P. MOULIN.** *On Spatial Adaptation of Motion Field Smoothness in Video Coding*